(19) Europäisches Patentamt / European Patent Office / Office européen des brevets

(11) **EP 4 412 214 A1**

(12) **EUROPEAN PATENT APPLICATION**
published in accordance with Art. 153(4) EPC

(43) Date of publication:
**07.08.2024  Bulletin 2024/32**

(21) Application number: **21958037.0**

(22) Date of filing: **27.09.2021**

(51) International Patent Classification (IPC):
**H04N 19/61** (2014.01)   **H04N 19/60** (2014.01)
**H04N 19/176** (2014.01)

(52) Cooperative Patent Classification (CPC):
**H04N 19/176; H04N 19/60; H04N 19/61**

(86) International application number:
**PCT/CN2021/121047**

(87) International publication number:
**WO 2023/044919 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.**
**Dongguan, Guangdong 523860 (CN)**

(72) Inventor: **WANG, Fan**
**Dongguan, Guangdong 523860 (CN)**

(74) Representative: **Taor, Simon Edward William et al
Venner Shipley LLP
200 Aldersgate
London EC1A 4HD (GB)**

(54) **VIDEO ENCODING AND DECODING METHOD, DEVICE AND SYSTEM, AND STORAGE MEDIUM**

(57)    The present application provides a video encoding and decoding method, device and system, and a storage medium. The method comprises: performing inter prediction on a current block to obtain a prediction block of the current block; determining, according to the prediction block, a transform kernel corresponding to the current block; and performing inverse transform on a target transform coefficient according to the transform kernel, and obtaining a residual block of the current block according to a transform result of the inverse transform. That is, according to the present application, the selection of the transform kernel is determined or guided or assisted by a feature of the prediction block on the basis of the correlation between a residual texture and a texture of the prediction block itself, thereby improving the compression efficiency of the current block while reducing the transmission of selection information of the transform kernel in a code stream and reducing the overhead of the transform in the code stream.

**FIG. 9**

Description

TECHNICAL FIELD

The disclosure relates to the technical field of video encoding and decoding, and in particular to a method for video encoding, a method for video decoding, a device for video encoding, a device for video decoding, a video encoding and decoding system, and a storage medium.

BACKGROUND

Digital video technologies may be incorporated into various video apparatuses, such as digital televisions, smartphones, computers, e-readers, or video players, etc. With the development of video technologies, a large amount of data is included in video data. In order to facilitate transmission of the video data, the video apparatus perform video compression technologies to make the video data more efficient for transmission or storage.

Video compression is achieved through coding, and coding processes include a prediction process, a transform process, a quantization process, etc. For example, a prediction block of the current block is determined through intra prediction and/or inter prediction, the prediction block is subtracted from the current block to obtain a residual block, the residual block is transformed to obtain a transform coefficient, the transform coefficient is quantized to obtain a quantization coefficient, and the quantization coefficient is encoded to form a bitstream.

Transform refers to transforming the residual block from a spatial domain to a frequency domain to remove correlation between residuals. However, current transform methods have poor transform effect, resulting in low efficiency of video compression.

SUMMARY

Embodiments of the disclosure provide a method for video encoding, a method for video decoding, a device for video encoding, a device for video decoding, a video encoding and decoding system, and a storage medium, to improve the transform effect and thus improve the video compression efficiency.

According to a first aspect, the disclosure provides a method for video decoding, the method includes the following operations.

A bitstream is decoded to determine a target transform coefficient of a current block, the target transform coefficient is a transform coefficient formed by secondary transform of a residual block of the current block at an encoding side.

The current block is predicted to obtain a prediction block of the current block.

A transform core corresponding to the current block is determined according to the prediction block.

Inverse transform is performed on the target transform coefficient according to the transform core, and the residual block of the current block is obtained according to a transform result of the inverse transform.

According to a second aspect, an embodiment of the disclosure provides a method for video encoding, the method includes the following operations.

A current block is predicted to obtain a prediction block of the current block.

A transform core corresponding to the current block is determined according to the prediction block.

A residual block of the current block is obtained according to the prediction block and the current block.

The residual block is transformed according to the transform core, and a transformed coefficient is encoded to obtain a bitstream.

According to a third aspect, the disclosure provides a video encoder, the video encoder is configured to execute the method in the above first aspect or various implementations thereof. Specifically, the encoder includes functional units configured to execute the method in the above first aspect or various implementations thereof.

According to a fourth aspect, the disclosure provides a video decoder, the video decoder is configured to execute the method in the above second aspect or various implementations thereof. Specifically, the decoder includes functional units configured to execute the method in the above second aspect or various implementations thereof.

According to a fifth aspect, there is provided a video encoder, the video encoder includes a processor and a memory. The memory is configured to store a computer program, and the processor is configured to call and execute the computer program stored in the memory, to execute the method in the above first aspect or various implementations thereof.

According to a sixth aspect, there is provided a video decoder, the video decoder includes a processor and a memory. The memory is configured to store a computer program, and the processor is configured to call and execute the computer program stored in the memory, to execute the method in the above second aspect or various implementations thereof.

According to a seventh aspect, there is provided a video encoding and decoding system, the video encoding and decoding system includes a video encoder and a video decoder. The video encoder is configured to execute the method in the above first aspect or various implementations thereof, and the video decoder is configured to execute the method in the above second aspect or various implementations thereof.

According to an eighth aspect, there is provided a chip, the chip is configured to implement the method in any one of the above first and second aspects or various implementations thereof. Specifically, the chip includes a processor configured to call and execute a computer program from a memory, so that a device mounted with the chip executes the method in any one of the above first and second aspects or various implementations thereof.

According to a ninth aspect, there is provided a computer-readable storage medium, the computer-readable storage medium is configured to store a computer program, the computer program allows a computer to execute the method in any one of the above first and second aspects or various implementations thereof.

According to a tenth aspect, there is provided a computer program product, the computer program product includes computer program instructions, the computer program instructions allow a computer to execute the method in any one of the above first and second aspects or various implementations thereof.

According to an eleventh aspect, there is provided a computer program, the computer program allows a computer to execute the method in any one of the above first and second aspects or various implementations thereof when the computer program is executed on the computer.

Based on the above technical solutions, during intra prediction of video encoding and decoding, a decoding side obtains a target transform coefficient of a current block by decoding a bitstream; predicts the current block to obtain a prediction block of the current block; determines a transform core corresponding to the current block according to the prediction block; and performs inverse transform on the target transform coefficient according to the transform core, and obtains a residual block of the current block according to a transform result of the inverse transform. That is, according to the disclosure, selection of the transform core is determined or guided or assisted by characteristics of the prediction block based on correlation between textures of the residual and of the prediction block itself, which improves compression efficiency of the current block while reduces transmission of selection information for the transform core in the bitstream and reduces overhead of the transform in the bitstream.

BRIEF DESCRIPTION OF THE DRAWINGS

FIG. 1 is a schematic block diagram of a video encoding and decoding system related to an embodiment of the disclosure.

FIG. 2 is a schematic block diagram of a video encoder related to an embodiment of the disclosure.

FIG. 3 is a schematic block diagram of a video decoder related to an embodiment of the disclosure.

FIG. 4A is a schematic diagram of an original picture.

FIG. 4B is a frequency domain diagram of FIG. 4A after Discrete Cosine Transform (DCT).

FIG. 5 is a schematic diagram of Low Frequency Non-Separable Transform (LFNST).

FIG. 6 is a schematic diagram of basis pictures corresponding to transform cores.

FIG. 7 is a schematic diagram of an intra prediction mode.

FIG. 8 is a schematic diagram of another intra prediction mode.

FIG. 9 is a schematic flowchart of a method for video decoding provided by an embodiment of the disclosure.

FIG. 10 is a schematic diagram of a video decoding process related to an embodiment of the disclosure.

FIG. 11 is another schematic flowchart of a method for video decoding provided by an embodiment of the disclosure.

FIG. 12 is a schematic diagram of a video decoding process related to an embodiment of the disclosure.

FIG. 13 is a schematic flowchart of a method for video encoding provided by an embodiment of the disclosure.

FIG. 14 is a schematic diagram of a video encoding process related to an embodiment of the disclosure.

FIG. 15 is a schematic flowchart of a method for video encoding provided by an embodiment of the disclosure.

FIG. 16 is a schematic diagram of a video encoding process related to an embodiment of the disclosure.

FIG. 17 is a schematic block diagram of a video decoder provided by an embodiment of the disclosure.

FIG. 18 is a schematic block diagram of a video encoder provided by an embodiment of the disclosure.

FIG. 19 is a schematic block diagram of an electronic device provided by an embodiment of the disclosure.

FIG. 20 is a schematic block diagram of a video encoding and decoding system provided by an embodiment of the disclosure.

DETAILED DESCRIPTION

The disclosure may be applied to the fields of picture encoding and decoding, video encoding and decoding, video encoding and decoding by hardware, video encoding and decoding by dedicated circuits, real-time video encoding and decoding, etc. For example, solutions of the disclosure may be combined with an Audio Video coding Standard (referred to as AVS for abbreviation), such as a H.264/Audio Video Coding (referred to as AVC for abbreviation) standard, a H.265/High Efficiency Video Coding (referred to as HEVC for abbreviation) standard, and a H.266/Versatile Video Coding (referred to as VVC for abbreviation) standard. Alternatively, the solutions of the disclosure may be operated in combination with other exclusive or industry standards, including ITU-TH.261, ISO/IECMPEG-1Visual, ITU-TH.262 or ISO/IECMPEG-2Visual, ITU-TH.263, ISO/IECMPEG-4Visual, ITU-TH.264 (also referred to as ISO/IECMPEG-4AVC), and including Scalable Video Codec (SVC) and Multi-view Video Codec (MVC) extensions. It should be understood that technologies of the disclosure are not limited to any specific encoding and decoding standard or technology.

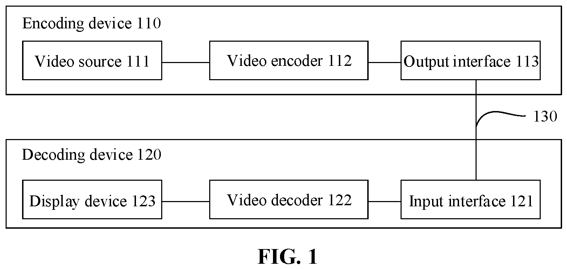

In order to facilitate understanding, a video encoding and decoding system related to an embodiment of the disclosure is introduced first with reference to FIG. 1.

FIG. 1 is a schematic block diagram of a video encoding and decoding system related to an embodiment of the disclosure. It should be noted that FIG. 1 is only an example, and the video encoding and decoding system in the embodiment of the disclosure includes, but is not limited to what shown in FIG. 1. As shown in FIG. 1, the video encoding and decoding system 100 includes an encoding device 110 and a decoding device 120. The encoding device is configured to encode (which may be understood as "compress") video data to generate a bitstream and transmit the bitstream to the decoding device. The decoding device decodes the bitstream generated by the encoding device to obtain the decoded video data.

The encoding device 110 in the embodiment of the disclosure may be understood as a device with a video encoding function, and the decoding device 120 may be understood as a device with a video decoding function. That is, the embodiment of the disclosure includes a wider range of devices for the encoding device 110 and the decoding device 120, for example, includes a smartphone, a desktop computer, a mobile computing device, a notebook (such as laptop) computer, a tablet computer, a set-top box, a television, a camera, a display device, a digital media player, a video game console, a vehicle-mounted computer, etc.

In some embodiments, the encoding device 110 may transmit the encoded video data (such as the bitstream) to the decoding device 120 through a channel 130. The channel 130 may include one or more media and/or devices capable of transmitting the encoded video data from the encoding device 110 to the decoding device 120.

In an example, the channel 130 includes one or more communication media which allow the encoding device 110 to directly transmit the encoded video data to the decoding device 120 in real time. In the example, the encoding device 110 may modulate the encoded video data according to a communication standard and transmit the modulated video data to the decoding device 120. The communication media include a wireless communication medium, such as a radio frequency spectrum. Optionally, the communication media may further include a wired communication medium, such as one or more physical transmission lines.

In another example, the channel 130 includes a storage medium which may store video data encoded by the encoding device 110. The storage medium includes a variety of data storage media of a local access type, such as an optical disk, a Digital Versatile Disk (DVD), a flash memory, etc. In the example, the decoding device 120 may obtain the encoded video data from the storage medium.

In another example, the channel 130 may include a storage server which may store the video data encoded by the encoding device 110. In the example, the decoding device 120 may download the stored encoded video data from the storage server. Optionally, the storage server may store the encoded video data and may transmit the encoded video data to the decoding device 120, such as a web server (for example, used in a website), a File Transfer Protocol (FTP) server, etc.

In some embodiments, the encoding device 110 includes a video encoder 112 and an output interface 113. The output interface 113 may include a modulator/demodulator (modem) and/or a transmitter.

In some embodiments, the encoding device 110 may include a video source 111 in addition to the video encoder 112 and the input interface 113.

The video source 111 may include at least one of a video acquisition device (such as a video camera), a video archive, a video input interface or a computer graphics system. The video input interface is configured to receive video data from a video content provider, and the computer graphics system is configured to generate video data.

The video encoder 112 encodes video data from the video source 111 to generate a bitstream. The video data may include one or more pictures or sequences of pictures. The bitstream contains encoding information of the pictures or sequences of pictures in form of a bit stream. The encoding information may include encoded picture data and associated data. The associated data may include a Sequence Parameter Set (referred to as SPS for abbreviation), a Picture Parameter Set (referred to as PPS for abbreviation) and other syntax structures. The SPS may contain parameters applied to one or more sequences. The PPS may contain parameters applied to one or more pictures. The syntax structure refers to a set of zero or more syntax elements arranged in a specified order in the bitstream.

The video encoder 112 directly transmits the encoded video data to the decoding device 120 through the output interface 113. The encoded video data may also be stored on a storage medium or a storage server, to be read by the decoding device 120 subsequently.

In some embodiments, the decoding device 120 includes an input interface 121 and a video decoder 122.

In some embodiments, the decoding device 120 may include a display device 123 in addition to the input interface 121 and the video decoder 122.

The input interface 121 includes a receiver and/or a modem. The input interface 121 may receive the encoded video data through the channel 130.

The video decoder 122 is configured to decode the encoded video data to obtain the decoded video data and transmit the decoded video data to the display device 123.

The display device 123 displays the decoded video data. The display device 123 may be integrated with the decoding device 120, or may be located outside the decoding device 120. The display device 123 may include a variety of display devices, such as a Liquid Crystal Display (LCD), a plasma display, an Organic Light Emitting Diode (OLED) display, or other types of display devices.

Furthermore, FIG. 1 is only an example, and technical solutions of embodiments of the disclosure are not limited to FIG. 1. For example, technologies of the disclosure may also be applied to single-side video encoding or single-side video decoding.

A video coding framework related to an embodiment of the disclosure is introduced below.

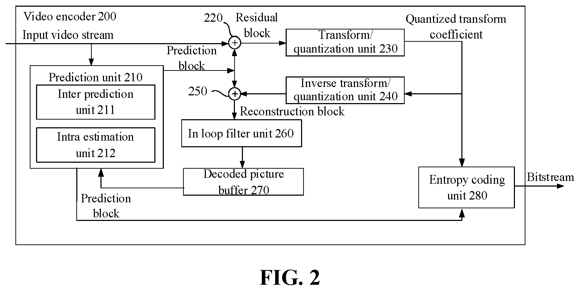

FIG. 2 is a schematic block diagram of a video encoder related to an embodiment of the disclosure. It should be understood that the video encoder 200 may be configured to perform lossy compression on pictures, or may be configured to perform lossless compression on pictures. The lossless compression may be visually lossless compression or mathematically lossless compression.

The video encoder 200 may be applied to picture data in a luma-chroma (YCbCr, YUV) format. For example, a ratio of the YUV may be 4:2:0, 4:2:2 or 4:4:4, Y represents luma, Cb(U) represents blue chroma, Cr(V) represents red chroma, U and V represent chroma which is used to describe color and saturation. For example, in terms of a color format, 4:2:0 represents that every 4 pixels have 4 luma components and 2 chroma components (YYYYCbCr), 4:2:2 represents that every 4 pixels have 4 luma components and 4 chroma components (YYYYCbCrCbCr), and 4:4:4 represents full-pixel display (YYYYCbCrCbCrCbCrCbCr).

For example, the video encoder 200 reads video data, and with respect to each frame of picture in the video data, the video encoder 200 divides a frame of picture into several Coding Tree Units (CTUs). In some examples, CTB may be referred to as a "tree-shape block", a "Largest Coding Unit" (referred to as LCU for abbreviation) or a "Coding Tree Block" (referred to as CTB for abbreviation). Each CTU may be associated with a pixel block with an equal size in the picture. Each pixel may correspond to one luma (or luminance) sample and two chroma (or chrominance) samples. Therefore, each CTU may be associated with one luma sample block and two chroma sample blocks. For example, the CTU has a size of 128×128, 64×64, 32×32, etc. The CTU may be further divided into several Coding Units (CUs) for coding. The CU may be a rectangular block or a square block. The CU may be further divided into a Prediction Unit (referred to as PU for abbreviation) and a Transform Unit (referred to as TU for abbreviation), which may make processes of coding, prediction, transform and separation more flexible. In an example, the CTU is divided into CUs in a quad-tree mode, and the CU is divided into TUs and PUs in a quad-tree mode.

The video encoder and the video decoder may support various sizes of PUs. It is assumed that a specific CU has a size of 2N×2N, the video encoder and the video decoder may support PUs with a size of 2N×2N or N×N to be used in intra prediction, and support symmetric PUs with a size of 2N×2N, 2N×N, N×2N, N×N or similar sizes to be used in inter prediction. The video encoder and the video decoder may also support asymmetric PUs with a size of 2N×nU, 2N×nD, nL×2N and nR×2N to be used in inter prediction, here U, D, L and R represent upper, down, left and right respectively. For example, 2N×nU refers to dividing a 2N×2N CU into two PUs according to an upper to lower ratio of 1:3, 2N×nD refers to dividing a 2N×2N CU into two PUs according to an upper to lower ratio of 3:1, nL×2N refers to dividing a 2N×2N CU into two PUs according to a left to right ratio of 1:3, nR×2N refers to dividing a 2N×2N CU into two PUs according to a left to right ratio of 3:1.

In some embodiments, as shown in FIG. 2, the video encoder 200 may include a PU 210, a residual unit 220, a transform/quantization unit 230, an inverse transform/quantization unit 240, a reconstruction unit 250, and an in loop filter unit 260, a decoded picture buffer 270, and an entropy coding unit 280. It should be noted that the video encoder 200 may include more, less or different functional components.

Optionally, in the disclosure, a current block may be referred to as a current CU or a current PU, etc. A prediction block may also be referred to as a prediction picture block or a picture prediction block, and a reconstructed picture block may also be referred to as a reconstruction block or a picture-reconstructed picture block.

In some embodiments, the PU 210 includes an inter PU 211 and an intra estimation unit 212. Since there is strong correlation between adjacent pixels in a frame of a video, an intra prediction method is used in video encoding and decoding technologies, to eliminate spatial redundancy between adjacent pixels. Since there is strong similarity between adjacent frames in a video, an inter prediction method is used in video encoding and decoding technologies, to eliminate temporal redundancy between adjacent frames, thereby improving coding efficiency.

The inter PU 211 may be used in inter prediction. The inter prediction may refer to picture information of different frames. The inter prediction uses motion information to find a reference block from a reference frame, and generates a prediction block according to the reference block, to eliminate temporal redundancy. The frames used in the inter prediction may be P frames and/or B frames. The P frame refers to a forward prediction frame, and the B frame refers to a bidirectional prediction frame. The motion information includes a reference frame list where the reference frame is located, a reference frame index, and a motion vector. The motion vector may be a motion vector of a whole pixel or sub-pixel. If the motion vector is the motion vector of a sub-pixel, interpolation filtering need to be used in the reference frame, to make required blocks of the sub-pixel. Here, the block of the whole pixel or sub-pixel in the reference frame found according to the motion vector is referred to as the reference block. Some technologies may directly use the reference block as the prediction block, and some technologies may perform further processes based on the reference block to generate the prediction block. Performing further processes based on the reference block to generate the prediction block may also be understood as using the reference block as the prediction block and then performing further processes based on the prediction block to generate a new prediction block.

The intra estimation unit 212 (also referred to as an intra PU) only refers to information of the same frame of picture, to predict pixel information in a current encoded picture block to eliminate spatial redundancy. The frame used in the intra prediction may be an I frame. For example, with regard to a $4 \times 4$ current block, pixels in a left row and an upper column of the current block are reference pixels of the current block, and the intra prediction uses these reference pixels to predict the current block. All of these reference pixels may be available, that is, all of these reference pixels may be encoded and decoded. Alternatively, part of these reference pixels may be unavailable. For example, the current block is at a leftmost side of the entire frame, then reference pixels at the left side of the current block are unavailable. Alternatively, when the current block is encoded and decoded, a lower left part of the current block has not been encoded or decoded, then reference pixels at the lower left are also unavailable. In a case that the reference pixels are unavailable, the filling may be performed by using the available reference pixels or some values or some methods, or the filling may not be performed.

The intra prediction has multiple prediction modes. Taking international digital video coding standard H series as an example, the H.264/AVC standard has 8 angle prediction modes and 1 non-angle prediction mode, and H.265/HEVC has been extended to 33 angle prediction modes and 2 non-angle prediction modes. Intra prediction modes used by HEVC include Planar, DC and 33 angle modes, i.e., a total of 35 prediction modes. Intra prediction modes used by VVC include Planar, DC and 65 angle modes, i.e., a total of 67 prediction modes. With regard to the luma component, there is a Matrix based Intra Prediction (MIP) prediction mode obtained by training, and with regard to the chroma component, there is a Cross Component Linear Model (CCLM) prediction mode.

It should be noted that with the increase of angle modes, the intra prediction will be more accurate and better comply with requirements of development of high-definition and ultra-high-definition digital videos.

The residual unit 220 may generate a residual block of the CU based on the pixel block of the CU and the prediction block of the PU of the CU. For example, the residual unit 220 may generate the residual block of the CU such that each sample in the residual block has a value equal to a difference between a sample in the pixel block of the CU and a corresponding sample in the prediction block of the PU of the CU.

The transform/quantization unit 230 may quantize transform coefficients. The transform/quantization unit 230 may quantize a transform coefficient associated with the TU of the CU based on a Quantization Parameter (QP) value associated with the CU. The video encoder 200 may adjust a quantization level applied to the transform coefficient associated with the CU by adjusting the QP value associated with the CU.

The inverse transform/quantization unit 240 may apply inverse quantization and inverse transform to the quantized transform coefficient respectively, to reconstruct the residual block from the quantized transform coefficient.

The reconstruction unit 250 may add samples of the reconstructed residual block to corresponding samples of one or more prediction blocks generated by the PU 210, to generate a reconstructed picture block associated with the TU. By reconstructing the sample block of each TU of the CU in this way, the video encoder 200 may reconstruct the pixel block of the CU.

The in loop filter unit 260 may perform the de-blocking filtering operation to reduce the blocking effect of the pixel block associated with the CU.

In some embodiments, the in loop filter unit 260 includes a de-blocking filtering unit and a Sample Adaptive Offset/Adaptive Loop Filtering (SAO/ALF) unit, the de-blocking filtering unit is configured to remove blocking effects, and the SAO/ALF unit is configured to remove ringing effects.

The decoded picture buffer 270 may store a reconstructed pixel block. The inter PU 211 may use a reference picture including the reconstructed pixel block, to perform inter prediction on PUs of other pictures. Furthermore, the intra estimation unit 212 may use the reconstructed pixel block in the decoded picture buffer 270, to perform intra prediction on other PUs in the same picture as the CU.

The entropy coding unit 280 may receive the quantized transform coefficient from the transform/quantization unit 230. The entropy coding unit 280 may perform one or more entropy coding operations on the quantized transform coefficient, to generate entropy encoded data.

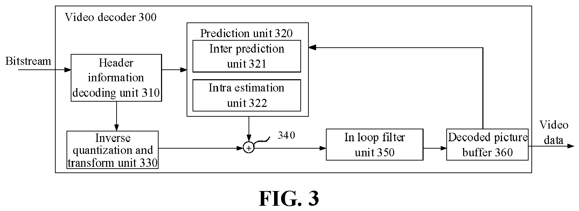

FIG. 3 is a schematic block diagram of a decoder related to an embodiment of the disclosure.

As shown in FIG. 3, the video decoder 300 includes an entropy decoding unit 310, a PU 320, an inverse quantization and transform unit 330, a reconstruction unit 340, an in loop filter unit 350, and a decoded picture buffer 360. It should be noted that the video decoder 300 may include more, less or different functional components.

The video decoder 300 may receive a bitstream. The entropy decoding unit 310 may parse the bitstream to extract syntax elements from the bitstream. As a part of parsing the bitstream, the entropy decoding unit 310 may parse entropy encoded syntax elements in the bitstream. The PU 320, the inverse quantization and transform unit 330, the reconstruction unit 340 and the in loop filter unit 350 may decode video data according to the syntax elements extracted from the bitstream, that is, generate the decoded video data.

In some embodiments, the PU 320 includes an intra estimation unit 321 and an inter PU 322.

The intra estimation unit 321 (also referred to as an intra PU) may perform intra prediction to generate a prediction block of the PU. The intra estimation unit 321 may use an intra prediction mode to generate the prediction block of the PU based on pixel blocks of spatially adjacent PUs. The intra estimation unit 321 may also determine the intra prediction mode of the PU according to one or more syntax elements parsed from the bitstream.

The inter PU 322 may construct a first reference picture list (List 0) and a second reference picture list (List 1) according to syntax elements parsed from the bitstream. Furthermore, if the PU uses inter prediction coding, the entropy decoding unit 310 may parse motion information of the PU. The inter PU 322 may determine one or more reference blocks of the PU according to the motion information of the PU. The inter PU 322 may generate a predictive block of the PU according to one or more reference blocks of the PU.

The inverse quantization and transform unit 330 (also referred to as an inverse transform/quantization unit) may inversely quantize (i.e., de-quantize) a transform coefficient associated with a TU. The inverse quantization and transform unit 330 may use a QP value associated with a CU of the TU to determine a quantization level.

After inversely quantizing the transform coefficient, the inverse quantization and transform unit 330 may apply one or more inverse transforms to the inverse quantized transform coefficient, to generate a residual block associated with the TU.

The reconstruction unit 340 uses the residual block associated with the TU of the CU and the prediction block of the PU of the CU to reconstruct a pixel block of the CU. For example, the reconstruction unit 340 may add samples of the residual block to corresponding samples of the prediction block to reconstruct the pixel block of the CU, to obtain a reconstructed picture block.

The in loop filter unit 350 may perform the deblocking filtering operation to reduce the blocking effect of the pixel block associated with the CU.

The video decoder 300 may store the reconstructed picture of the CU in the decoded picture buffer 360. The video decoder 300 may use the reconstructed picture in the decoded picture buffer 360 as a reference picture used for subsequent prediction, or transmit the reconstructed picture to a display device for presentation.

As may be seen from the above FIG. 2 and FIG. 3, a basic process of video encoding and decoding is as follows. At the encoding side, a frame of picture is divided into blocks. For a current block, the PU 210 uses intra prediction or inter prediction to generate a prediction block of the current block. The residual unit 220 may calculate a residual block based on the prediction block and an original block of the current block, for example, subtract the prediction block from the original block of the current block to obtain the residual block, the residual block may also be referred to as residual information. The residual block is subjected to transform, quantization or other processes made by the transform/quantization unit 230, so that information which is insensitive to human eyes may be removed to eliminate visual redundancy. Optionally, the residual block before subjecting to transform and quantization made by the transform/quantization unit 230 may be referred to as a time domain residual block, and the time domain residual block after subjecting to transform and quantization made by the transform/quantization unit 230 may be referred to as a frequency residual block or a frequency domain residual block. The entropy coding unit 280 receives a quantized transform coefficient output by the transform and quantization unit 230, and may perform entropy coding on the quantized transform coefficient to output a bitstream. For example, the entropy coding unit 280 may eliminate character redundancy according to a target context model and probability information of a binary bitstream.

At the decoding side, the entropy decoding unit 310 may parse the bitstream to obtain prediction information, quantization coefficient matrix or the like of the current block. The PU 320 uses intra prediction or inter prediction to the current block based on the prediction information, to generate a prediction block of the current block. The inverse quantization and transform unit 330 uses the quantization coefficient matrix obtained from the bitstream to perform inverse quantization and inverse transform on the quantization coefficient matrix, to obtain a residual block. The reconstruction unit 340 adds the prediction block to the residual block to obtain a reconstruction block. The reconstruction block constitutes a reconstructed picture, and the in loop filter unit 350 performs in-loop filtering on the reconstructed picture based on the picture or based on the block, to obtain a decoded picture. The encoding side also needs operations similar to those of the decoding side, to obtain the decoded picture. The decoded picture may also be referred to as a reconstructed picture, and the reconstructed picture may be used as a reference frame for inter prediction of subsequent frames.

It should be noted that block division information determined by the encoding side, mode information or parameter information such as prediction, transform, quantization, entropy coding, in-loop filtering, or the like are carried in the bitstream if necessary. The decoding side determines the same block division information, mode information or parameter information such as prediction, transform, quantization, entropy coding, in-loop filtering, or the like as the encoding side by parsing the bitstream and analyzing according to existing information, thereby ensuring that the decoded picture obtained by the encoding side is the same as the decoded picture obtained by the decoding side.

The current block may be the current CU or the current PU, etc.

The above descriptions are the basic process of video codec in a block-based hybrid coding framework. With the development of technologies, some modules or operations of the framework or process may be optimized. The disclosure is applicable to the basic process of video codec in the block-based hybrid coding framework, but is not limited to the framework and process.

It may be seen from the above descriptions that during coding, the general hybrid coding framework may perform prediction first, and the prediction uses spatial or temporal correlation performance to obtain a picture which is the same or similar to the current block. With regard to a block, a situation where the prediction block is exactly the same as the current block may occur, however, it is difficult to ensure that the same situation occurs to all blocks in a video, especially for natural videos or videos captured by cameras, since noise exists. Furthermore, it is difficult to completely predict variations of irregular motion, distorted deformation, occlusion, luma, or the like in the video. Therefore, the hybrid coding framework may subtract the prediction picture from the original picture of the current block to obtain the residual picture, or subtract the prediction block from the current block to obtain the residual block. The residual block is usually much simpler than the original picture, therefore prediction may significantly improve compression efficiency. The residual block is not directly encoded, instead, the residual block is usually transformed first. Transform refers to transforming the residual picture from the spatial domain to the frequency domain, to remove correlation of the residual picture. After the residual picture is transformed into the frequency domain, since most of energies are concentrated in a low-frequency region, most of the transformed non-zero coefficients are concentrated at the upper left corner. Next, quantization is used for further compression. Furthermore, since human eyes are not sensitive to high frequencies, a larger quantization step size may be used in a highfrequency region.

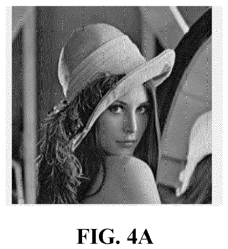

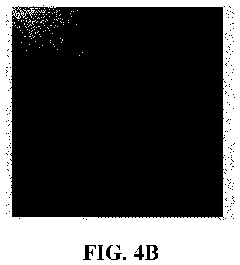

FIG. 4A is a schematic diagram of an original picture, and FIG. 4B is a frequency domain diagram of FIG. 4A after Discrete Cosine Transform (referred to as DCT for abbreviation). As shown in FIG. 4B, after the original picture shown in FIG. 4A subjecting to DCT transform, non-zero coefficients are present in a region at the upper left corner only. It should be noted that in the example, DCT transform is performed on the entire picture, however, in video encoding and decoding, the picture is processed by dividing into blocks, therefore transform is also performed based on blocks.

Transforms which are most commonly used in video compression standards include types of DCT-II, DCT-VIII and Discrete Sine Transform (DST)-VII, etc.

A basic formula of the DCT-II transform is shown in formula (1):

$$T_i(j) = \omega_0 \cdot \sqrt{\frac{2}{N}} \cdot \cos\left(\frac{\pi \cdot i \cdot (2j+1)}{2N}\right) \quad (1)$$

$$\omega_0 = \begin{cases} \sqrt{\dfrac{2}{N}} & i = 0 \\ 1 & i \neq 0 \end{cases}$$

$T_i(j)$ is a transformed coefficient, N is a number of points of an original signal, i, j=0,1,...,N-1, $\omega_0$ is a compensation coefficient.

A basic formula of the DCT-VIII transform is shown in formula (2):

$$T_i(j) = \sqrt{\frac{4}{2N+1}} \cdot \cos\left(\frac{\pi \cdot (2i+1) \cdot (2j+1)}{4N+2}\right) \quad (2)$$

A basic formula of the DST-VII transform is shown in formula (4):

$$T_i(j) = \sqrt{\frac{4}{2N+1}} \cdot \sin\left(\frac{\pi \cdot (2i+1) \cdot (j+1)}{2N+1}\right) \quad (3)$$

Since the picture is two-dimensional (2D), amount of computation and memory overhead for directly performing 2D transform are unacceptable to hardware conditions at that time. Therefore, when the above DCT-II, DCT-VIII and DST-VII are used for transform, the picture is split in horizontal and vertical directions, and two steps of one-dimensional transform are performed. For example, horizontal transform is performed first, and then vertical transform is performed; or, vertical transform is performed first, and then horizontal transform is performed.

The above transform method is effective for horizontal and vertical textures, and is very useful for improving compression efficiency. However, the above transform method has poor effects for oblique textures. Therefore, as requirements of compression efficiency increase continuously, if the oblique textures can be processed more effectively, the compression efficiency can be further improved.

In order to process residuals of oblique textures more effectively, secondary transform is used at present, that is, after the above primary transforms such as DCT-II, DCT-VIII, DST-VII, or the like, the frequency domain signal is processed for the second time, to convert the signal from a transform domain to another transform domain, and then perform operations such as quantization, entropy coding or the like thereon, of which the purpose is to further remove statistical redundancy.

Low Frequency Non-Separable Transform (referred to as LFNST for abbreviation) is a reduced secondary transform. At the encoding side, the LFNST is used after the primary transform and before quantization. At the decoding side, the LFNST is used after inverse quantization and before inverse primary transform.

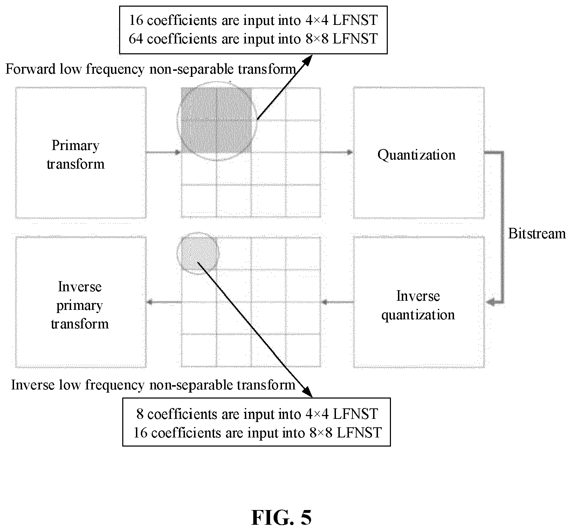

As shown in FIG. 5, at the encoding side, the LFNST performs a secondary transform on low-frequency coefficients after the primary transform at the upper left corner. The primary transform concentrates energies to the upper left corner by removing correlation of the picture. The secondary transform further removes correlation of the low-frequency coefficients after the primary transform. At the encoding side, 16 coefficients are input to a 4x4 LFNST transform core, and 8 coefficients are output; 64 coefficients are input to a 8x8 LFNST transform core, and 16 coefficients are output. At the decoding side, 8 coefficients are input to a 4x4 inverse LFNST transform core, and 16 coefficients are output; 16 coefficients are input to a 8x8 inverse LFNST transform core, and 64 coefficients are output.

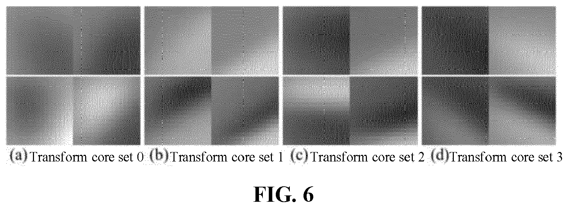

Optionally, the LFNST includes 4 sets of transform cores. Basis pictures corresponding to the 4 sets of transform cores are shown in FIG. 6, and some apparent oblique textures may be seen.

At present, the LFNST is only applied to intra-coded blocks. The intra prediction uses reconstructed pixels around the current block as a reference, to predict the current block. Since current videos are encoded from left to right and from top to bottom, reference pixels which may be used by the current block are usually at left and upper sides.

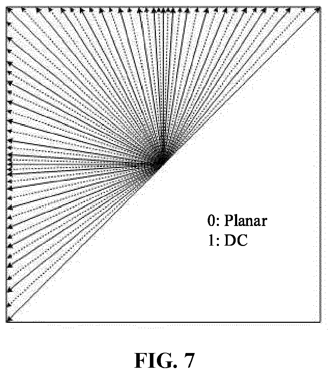

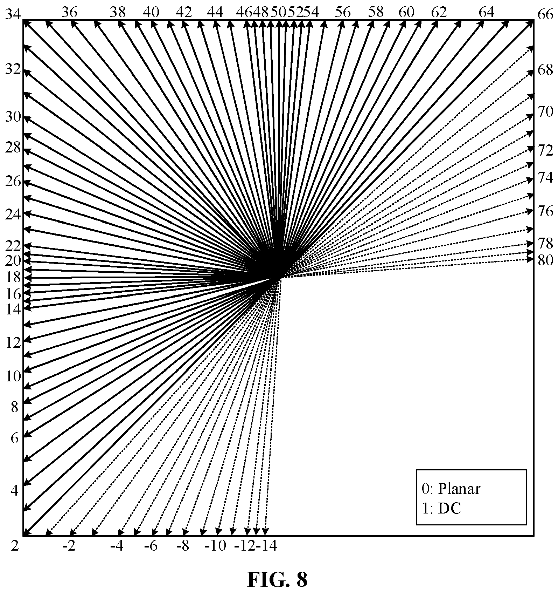

As shown in FIG. 7, 67 intra prediction modes are given, in which there are 65 angle prediction modes except 0: Planar and 1: DC. Planar usually processes some gradient textures, DC usually processes some flat regions, and intra angle prediction is usually used for blocks with apparent angle textures. Of course, a wide angle prediction mode may also be used for non-square blocks. The wide angle prediction mode makes the predicted angle have a range greater than an angle range of square blocks. As shown in FIG. 8, 2 to 66 are angle prediction modes corresponding to prediction modes of the square blocks, and -1 to -14 and 67 to 80 represent angle prediction modes extended in the wide angle prediction mode.

Angle prediction tiles the reference pixel to the current block according to a specified angle, as a prediction value, which means that the prediction block may have apparent directional texture, and residual of the current block after subjecting to the angle prediction may also present apparent angle characteristics statistically. Therefore, the transform core selected by the LFNST may be bound to the intra prediction mode. That is, after determining the intra prediction mode, the LFNST may only use a set of transform cores corresponding to the intra prediction mode.

Specifically, in an embodiment, the LFNST has a total of 4 sets of transform cores, each set has 2 transform cores. The correspondence between the intra prediction modes and the transform core sets is as shown in Table 1.

Table 1

| IntraPredMode | Tr.set index |
| --- | --- |
| IntraPredMode<0 | 1 |
| 0<=IntraPredMode<= 1 | 0 |
| 2<=IntraPredMode<=12 | 1 |
| 13<=IntraPredMode<=23 | 2 |
| 24<=IntraPredMode<=44 | 3 |
| 45<=IntraPredMode<=55 | 2 |
| 56<=IntraPredMode<=80 | 1 |
| 81<=IntraPredMode<=83 | 0 |

In Table 1, IntraPredMode represents the intra prediction mode, and Tr.set index represents an index of the transform core set.

It should be noted that cross-component prediction modes used in chroma intra prediction are 81 to 83, however, these modes are not provided for luma intra prediction.

The transform core of the LFNST may be transposed to process more angles with a transform core set. For example, in Table 1, all modes 13 to 23 and 45 to 55 correspond to a transform core set 2, however, it is apparent that modes 13 to 23 are close to a horizontal mode, and modes 45 to 55 are close to a vertical mode. After transforms and inverse transforms corresponding to modes 45 to 55 mode, they need to be matched by transposition.

In some embodiments, the LFNST has a total of 4 sets of transform cores, and it is specified which set used by the LFNST according to the intra prediction mode. This uses correlation between the intra prediction mode and the transform core of the LFNST, thereby reducing transmission of selection information for the transform core of the LFNST in the bitstream, and further saving codes. Furthermore, whether the current block will use the LFNST, and if the LFNST is used, whether the first or second one in a set is used, needs to be determined by the bitstream or other conditions.

It may be seen from the above descriptions that the LFNST may improve the compression efficiency of residuals of oblique textures, however, at present, the LFNST may only be applied to intra-coded blocks. This is because oblique textures have many possible directions, and the LFNST needs to use a variety of transform cores to process them. Although the LFNST uses some clustering processes, that is, multiple textures with similar angles use a kind of transform core, it still requires existence of multiple sets of transform cores. By using correlation between the intra prediction mode and the residuals, the transform core of the LFNST may be directly determined through the intra prediction mode, which reduces transmission of selection information for the transform core of the LFNST in the bitstream, and further saves codes.

In inter-coded blocks, a large proportion of residual textures may also present apparent angles, and it is proven by facts that the secondary transform may process residual textures of angles better based on the primary transform. However, there is no apparent correlation between the inter prediction mode (or inter motion information) and directions of the residual textures, and if overhead of selecting the transform core set is transmitted in the bitstream, it is adverse to improve compression efficiency. Therefore, the LFNST is not used in the inter-coded blocks, resulting in a low compression efficiency of the inter-coded blocks.

In order to solve the above technical problem, in the embodiments of the disclosure, the transform core corresponding to the current block is determined according to the prediction block of the current block, and the transform core is used to perform inverse transform on the decoded target transform coefficient of the current block, which improves compression efficiency of the current block while reduces transmission of selection information for the transform core in the bitstream and reduces overhead of the transform in the bitstream.

Video encoding and decoding methods provided by the embodiments of the disclosure will be introduced below with reference to specific embodiments.

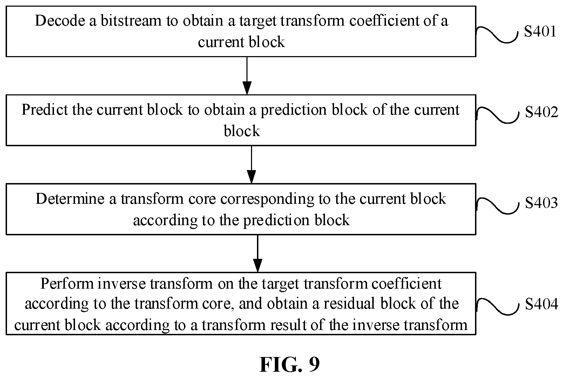

First, with reference to FIG. 9, a method for video decoding provided by an embodiment of the disclosure is introduced by taking the decoding side as an example.

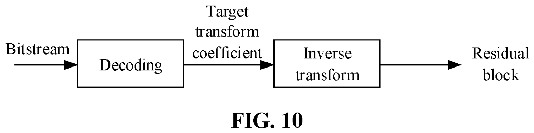

FIG. 9 is a schematic flowchart of a method for video decoding provided by an embodiment of the disclosure, and FIG. 10 is a schematic diagram of a video decoding process related to an embodiment of the disclosure. The embodiment of the disclosure is applied to the video decoder shown in FIG. 1 and FIG. 2. As shown in FIG. 9 and FIG. 10, the method of the embodiment of the disclosure includes the following operations S401 to S404.

At S401, a bitstream is decoded to obtain a target transform coefficient of a current block.

In some embodiments, the current block may also be referred to as a current decoding block, a current decoding unit, a decoding block, a to-be-decoded block, a current to-be-decoded block, etc.

In some embodiments, when the current block includes chroma component while does not include luma component, the current block may be referred to as a chroma block.

In some embodiments, when the current block includes luma component while does not include chroma component, the current block may be referred to as a luma block.

In some embodiments, the above target transform coefficient may be a primary transform coefficient which is also referred to as an initial transform coefficient, a first-time transform coefficient, a first variation coefficient, etc.

In some embodiments, the above target transform coefficient is a transform coefficient formed by secondary transform of a residual block of the current block at an encoding side. Specifically, the encoding side performs primary transform on the residual block of the current block, to obtain a primary transform coefficient; then, the encoding side performs secondary transform on the primary transform coefficient, to obtain the target transform coefficient of the current block. In some embodiments, the target transform coefficient at this time is also referred to as a secondary transform coefficient, or a second transform coefficient, etc.

In the embodiment, in the above S401, modes for the decoding side to decode the bitstream to obtain the target transform coefficient of the current block include, but are not limited to the following first and second modes.

First mode: the encoding side does not quantize the target transform coefficient during encoding, instead, encodes the target transform coefficient directly to obtain the bitstream. In this way, the decoding side decodes the bitstream and may directly obtain the target transform coefficient of the current block from the bitstream.

Second mode: the encoding side quantizes the target transform coefficient during encoding to obtain a quantization coefficient, and then encodes the quantization coefficient to obtain the bitstream. In this way, the decoding side decodes the bitstream to obtain a quantization coefficient of the current block, and performs inverse quantization on the quantization coefficient, to obtain the target transform coefficient of the current block.

At S402, the current block is predicted to obtain a prediction block of the current block.

In some embodiments, when the methods of the embodiments of the disclosure are applied to intra prediction, intra prediction is performed on the current block, to obtain the prediction block of the current block. Prediction modes used to perform intra prediction on the current block are not limited in the embodiments of the disclosure, and in particular, are determined according to actual situations.

In some embodiments, when the methods of the embodiments of the disclosure are applied to inter prediction, inter prediction is performed on the current block, to obtain the prediction block of the current block. Prediction modes used to perform inter prediction on the current block are not limited in the embodiments of the disclosure, and in particular, are determined according to actual situations.

Determination of the inter prediction mode is taken as an example below. The decoding side may determine the prediction block of the current block at least through modes shown in the following examples.

In an example, the bitstream includes indication information of an inter prediction mode corresponding to the current block. A corresponding inter mode is selected according to the indication information of the inter mode, to perform inter prediction on the current block, to obtain the prediction block of the current block.

In an example, the decoding side determines an inter prediction mode corresponding to the current block according to the same inter mode determination rule as the encoding side, and uses the determined inter prediction mode to perform inter prediction on the current block, to obtain the prediction block of the current block.

In an example, inter prediction is performed through an autoencoder, to obtain the prediction block of the current block. The autoencoder is a neural network model which is obtained by training through the prediction block obtained by inter prediction, and may implement inter prediction. The autoencoder includes a encoding network and a decoding network. During inter coding, the encoding side inputs the current block into the encoding network to obtain characteristic information of the current block, and then inputs the characteristic information of the current block into the decoding network to obtain the prediction block of the current block output by the decoding network. The prediction block is subtracted from an original value of the current block to obtain a residual block. After the residual block is transformed twice, it is then quantized to form the bitstream. Furthermore, the encoding side writes the characteristic information of the current block into the bitstream. In this way, the decoding side decodes the bitstream to obtain the characteristic information of the current block, and takes the same measure as the encoding side, that is, inputs the characteristic information of the current block into the decoding network of the autoencoder to obtain a prediction block of the current block. The prediction block is a prediction block obtained by the decoding side performing inter prediction on the current block.

It should be noted that in this operation, modes of performing inter prediction on the current block to obtain the prediction block of the current block include, but are not limited the above modes. The above descriptions take the inter prediction mode as an example. The modes shown in the above examples may also be used in the intra prediction mode, to determine the prediction block of the current block.

At S403, a transform core corresponding to the current block is determined according to the prediction block.

Since there is certain correlation between textures of the residual block and of the prediction block: taking inter coding as an example, with regard to blocks using inter coding, there is certain correlation between textures of the residual block and of the prediction block itself of inter prediction. For example, residuals usually appear at edges of an object, and the edges of the object show apparent gradient features in the prediction block. For another example, with regard to gradient textures such as wrinkles in clothes, textures of residuals usually have the same or similar direction as textures in the prediction block. Therefore, in the embodiments of the disclosure, selection of the transform core is determined or guided or assisted according to characteristics of the prediction block.

The transform core corresponding to the current block determined in the embodiments of the disclosure may be a transform core or a set of transform cores. Here, a set of transform cores includes at least two transform cores, for example, a set of transform cores includes two transform cores, or three transform cores, or more transform cores.

In some embodiments, selection of the transform core is related to texture information of the prediction block, so that the transform core corresponding to the current block may be determined by determining the texture information of the prediction block.

On the above basis, the above S403 includes the following operations S403-A and S403-B.

At S403-A, texture information of the prediction block is determined.

At S403-B, the transform core corresponding to the current block is determined according to the texture information of the prediction block.

The texture information of the prediction block includes any information which may represent texture characteristics of the prediction block, such as a texture direction of the prediction block, a texture size of the prediction block, etc.

In some embodiments, a spatial gray level co-occurrence matrix is used to represent the texture information of the prediction block. The spatial gray level co-occurrence matrix starts from a pixel with a gray level i in an $N \times N$ picture $f(x, y)$, and counts a probability $P(i, j, \delta, \theta)$ of a pixel with a gray level j and located at a distance $\delta = (dx2+dy2)^{1/2}$ from i appearing, $\theta$ is an angle between dx and $\delta$.

In some embodiments, gradient information of the prediction block is used to represent the texture information of the prediction block. The gradient information of the prediction block may represent a texture variation trend, i.e., a texture variation direction of the prediction block. At this time, the above S403-A includes the following operation S403-A1.

At S403-A1, the gradient information of the prediction block is determined.

Correspondingly, the above S403-B includes the following operation S403-B1.

At S403-B1, the transform core corresponding to the current block is determined according to the gradient information of the prediction block.

A process of determining the gradient information of the prediction block in the above S403-A1 will be introduced in detail below.

The gradient information of the prediction block includes at least one of a gradient direction or a gradient size of the prediction block.

Modes of determining the gradient information of the prediction block in the above S403-A1 include, but are not limited to the following first and second modes.

First mode: the gradient information of the prediction block is determined by way of a neural network model.

For example, the neural network model is obtained by training with a picture block as input and with gradient information of the picture block as constraints, and may be configured to predict the gradient information of the picture block. Specific network structure of the neural network model is not limited in the disclosure, and in particular, may be determined according to actual requirements. For example, the neural network model may be a picture convolutional neural network, an adversarial neural network, etc. In this way, during actual usage, the prediction block is used as a kind of picture block, and the decoding side may input the prediction block into the neural network model, to obtain the gradient information of the prediction block output by the neural network model.

Second mode: the gradient information of the prediction block may be determined by gradients of all or part of pixels in the prediction block. In the second mode, the above S403-A1 includes the following operations S403-A11 and S403-A12.

At S403-A11, gradients of N points in the prediction block are determined, N is a positive integer.

At S403-A12, the gradient information of the prediction block is determined according to the gradients of the N points.

Optionally, the above N points may be all the pixels in the prediction block.

Optionally, the above N points may be part of the pixels in the prediction block.

In an example, since pixels at an outermost layer in the prediction block are greatly affected by other picture blocks and have poor stability: in order to improve accuracy of determining the gradient information of the prediction block, the N points configured to determine the gradient information of the prediction block is selected as pixels in the prediction block other than pixels at an outermost layer.

In an example, the above N points are pixels obtained by using a certain sampling mode to sample pixels in the prediction block, for example, sample every other pixel once.

The gradient of at least one of the N points includes a horizontal gradient and/or a vertical gradient, the horizontal gradient may be understood as a gradient of the point in a horizontal direction, and the vertical gradient may be understood as a gradient of the point in a vertical direction. In this way, two gradients may be calculated separately or together.

Modes of determining the gradients of the N points in the prediction block in the above S403-A11 include, but are not limited to the following first to third modes.

First mode: for each of the N points, a gradient (such as a gradient size and a gradient direction) of the prediction block at this point is calculated, the gradient size is also referred to as amplitude. The gradient of the prediction block at this point is recorded as a gradient of this point.

Specifically, the prediction block is a picture block. Taking an i-th point of the N points as an example, it is assumed that a picture function of the prediction block is f(x, y), and a gradient of the picture function f(x, y) at the i-th point (x, y) is a vector with a specific magnitude and direction which is set to Gx and Gy, Gx represents a gradient of the picture function f(x, y) in x direction (i.e., a horizontal gradient), and Gy represents a gradient of the picture function f(x, y) in y direction (i.e., a vertical gradient). This gradient vector may be represented as shown in formula (4):

$$\nabla f(x, y) = [Gx, Gy]^T = [\frac{\partial f}{\partial x}, \frac{\partial f}{\partial y}]^T \tag{4}$$

where T represents transposition.

An amplitude of the above gradient vector is calculated through formula (5):

$$mag(\nabla f) = g(x, y) = \sqrt{\frac{\partial^2 f}{\partial x^2} + \frac{\partial^2 f}{\partial y^2}} \tag{5}$$

A direction angle of the above gradient vector is calculated through formula (6):

$$\phi(x, y) = \left| \frac{\partial f}{\partial x} \middle/ \frac{\partial f}{\partial y} \right| \tag{6}$$

The amplitude of the gradient vector calculated by the above formula (5) is recorded as a gradient size of the i-th point, and the direction angle of the gradient vector calculated by the above formula (6) is recorded as a gradient direction of the i-th point.

With reference to the above mode, the gradient of each of the N points may be calculated, for example, the gradient size and gradient direction of each point may be calculated.

Second mode: a neural network model is used to determine the gradient of each of the N points.

For example, the neural network model is trained with original values of multiple pixels in the picture as input and with true values of gradients of multiple pixels as constraints, so that the neural network model may predict gradients of the pixels in the picture. Specific network structure of the neural network model is not limited in the disclosure, and in particular, may be determined according to actual requirements. For example, the neural network model may be a picture convolutional neural network, an adversarial neural network, etc. During actual prediction, the above N points are input into the neural network model, and the gradient of each of the N points output by the neural network model is obtained. The obtained gradient of each of the N points includes at least one of the horizontal gradients or the vertical gradient.

Third mode: the gradient of each of the N points is determined according to pixel values of adjacent points.

In the third mode, the horizontal gradient and the vertical gradient are calculated separately, that is, in a case that the gradients of the N points include horizontal gradients and vertical gradients, the above S403-A11 includes the following operations S403-A111 and S403-A112.

At S403-A111, for an i-th point of the N points, a horizontal gradient of the i-th point is determined according to pixel values of adjacent points of the i-th point in a horizontal direction of the prediction block.

At S403-A112, a vertical gradient of the i-th point is determined according to pixel values of adjacent points of the i-th point in a vertical direction of the prediction block.

In the third mode, taking the i-th point of the N points as an example, a process of determining the horizontal gradient and the vertical gradient of the i-th point is introduced. Processes of determining gradients of other points of the N points refer to processes of the i-th point.

In the process of determining the horizontal gradient of the i-th point, the pixel values of the adjacent points of the i-th point in the horizontal direction are obtained first. The adjacent points may be multiple points or two points. An adjacent point, closest to the i-th point, of these adjacent points may be adjacent to the i-th point, or may not be adjacent to the i-th point. Optionally, all the above adjacent points are located at a left side of the i-th point or at a right side of the i-th point. Optionally, part of the above adjacent points are located at the left side of the i-th point, part of the adjacent points are located at the right side of the i-th point, and the number of adjacent points at the left and right sides may be the same or different. For example, there are four adjacent points of the i-th point in the horizontal direction, three of which are located at the left side of the i-th point, and one of which is located at the right side of the i-th point; or, two of which are located at the left side of the i-th point, and two of which is located at the right side of the i-th point. Selection of adjacent points of the i-th point in the horizontal direction is not limited in the embodiments of the disclosure. Then, the gradient of the i-th point in the horizontal direction is determined according to variation of the pixel values of the adjacent points of the i-th point in the horizontal direction. For example, if a difference between the pixel values of the adjacent points in the horizontal direction and the pixel value of the i-th point is not large, it means that horizontal texture of the prediction block is not mutant at the i-th point, that is, it is determined that the horizontal gradient of the i-th point is small. For another example, if the difference between the pixel values of the adjacent points in the horizontal direction and the pixel value of the i-th point is large, it means that the horizontal texture of the prediction block is mutant at the i-th point, that is, it is determined that the horizontal gradient of the i-th point is large.

The process of determining the vertical gradient of the i-th point is basically consistent with the above process of determining the horizontal gradient of the i-th point. The pixel values of the adjacent points of the i-th point in the vertical direction are obtained first. The adjacent points may be multiple points or two points. An adjacent point, closest to the i-th point, of these adjacent points may be adjacent to the i-th point, or may not be adjacent to the i-th point. Optionally, all the above adjacent points are located at an upper side of the i-th point or at a lower side of the i-th point. Optionally, part of the above adjacent points are located at the upper side of the i-th point, part of the adjacent points are located at the lower side of the i-th point, and the number of adjacent points at the upper and lower sides may be the same or different. For example, there are four adjacent points of the i-th point in the vertical direction, three of which are located at the upper side of the i-th point, and one of which is located at the lower side of the i-th point; or, two of which are located at the upper side of the i-th point, and two of which is located at the lower side of the i-th point. Selection of adjacent points of the i-th point in the vertical direction is not limited in the embodiments of the disclosure. Then, the gradient of the i-th point in the vertical direction is determined according to variation of the pixel values of the adjacent points of the i-th point in the vertical direction. For example, if a difference between the pixel values of the adjacent points in the vertical direction and the pixel value of the i-th point is not large, it means that vertical texture of the prediction block is not mutant at the i-th point, that is, it is determined that the vertical gradient of the i-th point is small. For another example, if the difference between the pixel values of the adjacent points in the vertical direction and the pixel value of the i-th point is large, it means that the horizontal texture of the prediction block is mutant at the i-th point, that is, it is determined that the vertical gradient of the i-th point is large.

The above S403-A111 of determining the horizontal gradient of the i-th point according to the pixel values of the adjacent points of the i-th point in the horizontal direction of the prediction block is not limited in the embodiments of the disclosure.

In some embodiments, implementations of the above S403-A111 include, but are not limited to the following first and second modes.

First mode: for each of the adjacent points of the i-th point in the horizontal direction of the prediction block, a difference value between the pixel value of each of the adjacent points and the pixel value of the i-th point is calculated, and a sum of the difference values is determined as the gradient of the i-th point in the horizontal direction, or an average value of the difference values is determined as the gradient of the i-th point in the horizontal direction.

Second mode: in a case that the adjacent points of the i-th point in the horizontal direction of the prediction block include a left adjacent point and a right adjacent point of the i-th point in the horizontal direction of the prediction block, a ratio of a difference value between a pixel value of the right adjacent point and a pixel value of the left adjacent point to 2 is determined to be the horizontal gradient of the i-th point.

The above S403-A112 of determining the vertical gradient of the i-th point according to the pixel values of the adjacent points of the i-th point in the vertical direction of the prediction block is not limited in the embodiments of the disclosure.

In some embodiments, implementations of the above S403-A112 include, but are not limited to the following first and second modes.

First mode: for each of the adjacent points of the i-th point in the vertical direction of the prediction block, a difference value between the pixel value of each of the adjacent points and the pixel value of the i-th point is calculated, and a sum of the difference values is determined as the gradient of the i-th point in the vertical direction, or an average value of the difference values is determined as the gradient of the i-th point in the vertical direction.

Second mode: in a case that the adjacent points of the i-th point in the vertical direction of the prediction block include an upper adjacent point and a lower adjacent point of the i-th point in the vertical direction of the prediction block, a ratio of a difference value between a pixel value of the lower adjacent point and a pixel value of the upper adjacent point to 2 is determined to be the vertical gradient of the i-th point.

The gradients of the N points in the prediction block are determined according to the above modes. Then, S403-A12 is performed to determine the gradient information of the prediction block according to the gradients of the N points.

In some embodiments, the above S403-A12 of determining the gradient information of the prediction block according to the gradients of the N points include, but are not limited to the following first and second modes.

First mode: the gradients of the N points are determined to be the gradient information of the prediction block. That is, the gradient information of the prediction block includes the gradients of the N points. The texture direction of the prediction block is estimated according to the gradients of the N points. Then, the transform core is selected according to the texture direction. For example, horizontal gradients and vertical gradients of all or several points of the N points are the same or approximately the same, then it may be estimated that the texture in the prediction block tends to be in 45°, and then a transform core or a transform core set which processes the 45° texture most effectively may be selected on the above basis.

Second mode: a sum of horizontal gradients of the N points, grad_hor_sum is determined; a sum of vertical gradients of the N points, grad_ver_sum is determined; and the gradient information of the prediction block, grad_para is determined according to the sum of horizontal gradients of the N points and the sum of vertical gradients of the N points.

In the second mode, the horizontal gradient of each of the N points determined in the above S403-A11 is summed to obtain grad_hor_sum, then the vertical gradient of each of the N points determined in the above S403-A11 is summed to obtain grad_ver_sum, and then grad_para is determined according to grad_hor_sum and grad_ver_sum.

In an example, grad_hor_sum and grad_ver_sum are determined to be grad_para, that is, the gradient information grad_para of the prediction block includes the sum of horizontal gradients of the N points, grad_hor_sum and the sum of vertical gradients of the N points, grad_ver_sum, and then the transform core corresponding to the current block is determined according to sizes of grad_hor_sum and grad_ver_sum. For example, when grad_hor_sum is equal to or approximately equal to grad_ver_sum, it may be estimated that the texture in the prediction block tends to be in 45°, and then a transform core or a transform core set which processes the 45° texture most effectively may be selected on the above basis. For another example, when at least one of grad_hor_sum or grad_ver_sum is small, to be less than a certain value, it may be estimated that the texture in the prediction block tends to be horizontal or vertical, and then a transform core or a set of transform cores without apparent directional texture may be selected on the above basis.

In another example, the gradient information of the prediction block is determined according to a ratio of the sum of horizontal gradients of the N points, grad_hor_sum to the sum of vertical gradients of the N points, grad_ver_sum, that is, grad_para=grad_hor_sum/grad_ver_sum.

In some embodiments, in a case that the sum of vertical gradients of the N points, grad_ver_sum is 0, the gradient information of the prediction block, grad_para is determined to be 0.

After determining the gradient information of the prediction block according to the above methods, S403-B1 is performed, that is, the transform core corresponding to the current block is determined according to the gradient information of the prediction block.

In some embodiments, the above S403-B1 includes the following operations S403-B11 to S403-B13.

At S403-B11, a correspondence between preset prediction block gradients and transform cores is obtained.

At S403-B12, a target transform core corresponding to the gradient information of the prediction block is determined from the correspondence.

At S403-B13, the target transform core is determined to be the transform core corresponding to the current block.

In the disclosure, a correspondence between prediction block gradients and the transform cores is created in advance, and the correspondence includes transform cores or transform core sets corresponding to gradients of different sizes of prediction blocks.

In an example, the correspondence between the gradient information of the prediction block, grad_para and the transform core sets is shown in Table 2.

Table 2

| grad_para | Tr.set index |
|---|---|
| (-1/2, 1/2) | 2 |
| [1/2, 2) | 3 |
| [2, +∞) | 2 |
| (-∞, -2] | 2 |
| (-2, -1/2] | 1 |

Tr.set index (transform.set index) represents an index of the transform core set, and grad_para represents the gradient information of the prediction block. As shown in Table 2, when the gradient information of the prediction block, grad_para is located at (-1/2, 1/2), [2, +∞) and (-∞, -2], it corresponds to a transform set 2; when the gradient information grad_para is located at [1/2, 2), it corresponds to a transform set 3; and when the gradient information grad_para is located at (-2, -1/2], it corresponds to a transform set 1. It should be noted that the above Table 2 is only an example. In an actual application, the correspondence between the gradient information of the prediction block, grad_para and the transform core sets includes, but is not limited to the above Table 2.

Optionally, during actual usage of the embodiments of the disclosure, transposition operations may also be used. Although both (-1/2, 1/2) and [2, +∞) correspond to the transform core set 2 in Table 2, (-1/2, 1/2) needs to be transposed during actual usage. For example, inverse transform is performed on a transform coefficient 0 corresponding to (-1/2, 1/2) by using the transform core set 2, to obtained a transform coefficient 1, and the transform coefficient 1 is transposed to obtain a transform coefficient 2. Whether transposition is performed, may be agreed in advance.

In some embodiments, when the embodiments of the disclosure are applied to inter coding, the transform core (such as the LFNST transform core) corresponding to inter coding of the disclosure may multiplex the transform core (such as the LFNST transform core) corresponding to intra coding, for example, transform cores in the above Table 2 multiplex transform cores in the above Table 1. In this way, additional space storing the transform cores and additional logic may not be added.

In some embodiments, the transform core (such as the LFNST transform core) corresponding to inter coding of the disclosure may partially multiplex the transform core (such as the LFNST transform core) corresponding to intra coding, for example, transform cores in the above Table 2 partially multiplex transform cores in the above Table 1.

In some embodiments, the transform core (such as the LFNST transform core) corresponding to inter coding of the disclosure does not multiplex the transform core (such as the LFNST transform core) corresponding to intra coding, for example, transform cores in the above Table 2 do not multiplex transform cores in the above Table 1.

In the above Table 2, a transform core set corresponding to the gradient information of the prediction block of the current block may be queried. For example, the gradient information of the prediction block of the current block determined according to the above methods is 1, 1 is located in the [1/2, 2) interval, and [1/2, 2) corresponds to the transform core set 3. Therefore, it is determined that the transform core corresponding to the current block is the transform core set 3.

In some embodiments, sizes of transform cores corresponding to different sizes of blocks are also different. For example, the size of the transform core corresponding to a 8×8 block is 4×4, and the size of the transform core corresponding to a 16×16 block is 8×8. Correspondences, corresponding to different sizes of transform cores, between preset prediction block gradients and the transform cores are also different. For example, a 8×8 transform core corresponds to a correspondence 1 between preset prediction block gradients and transform cores, and a 4×4 transform core corresponds to a correspondence 2 between the preset prediction block gradients and the transform cores.

On the above basis, the above S403-B11 includes the following operations S403-B111 and S403-B112.

At S403-B111, a size of the transform core corresponding to the current block is determined according to a size of the current block.

At S403-B112, a correspondence, corresponding to the size of the transform core, between the preset prediction block gradients and the transform cores is obtained according to the size of the transform core corresponding to the current block.

Correspondingly, the above S403-B12 includes the following operation S403-B121.

At S403-B121, the target transform core corresponding to the gradient information of the prediction block is determined from the correspondence corresponding to the size of the transform core.

The size of the transform core corresponding to the current block is not limited in the disclosure. For example, when at least one of a width of the current block or a height of the current block is less than 8, it is determined that the size of the transform core corresponding to the current block is $4 \times 4$. When each of the width of the current block and the height of the current block is greater than 4, it is determined that the size of the transform core corresponding to the current block is $8 \times 8$. When at least one of the width of the current block or the height of the current block is less than 8 and each of the width and the height is greater than 4, it is determined that the size of the transform core corresponding to the current block may be $4 \times 4$ or $8 \times 8$.

In some embodiments, the transformed quantization coefficients of residual of intra coding are statistically more than the coefficients of inter coding. In other words, the residual of intra coding is statistically more complex than the residual of inter coding. On one hand, this is determined by a difference between the intra prediction method and the inter prediction method, the intra prediction uses spatial correlation, and the inter prediction uses temporal correlation. On the other hand, in a random access configuration which is most commonly used by broadcasting, an intra frame is usually used as a reference frame at a lowest level of a Group of Pictures (GOP) structure, and usually has a relatively high quality requirement, while some inter frames have relatively low quality requirements. Therefore, usage conditions of the transform core of inter transform may be distinguished from those of the transform core of intra transform.

At present, the transform core of $4 \times 4$ transform (such as LFNST) is applied to small blocks, that is, blocks of which at least one of the width or the height is less than 8. Furthermore, the transform core of $8 \times 8$ transform (such as LFNST) is applied to larger blocks, that is, blocks of which both the width and the height are greater than 4. However, considering that the residual of inter coding is statistically simpler than the residual of intra coding, application situations of inter may be different from those of intra. For example, the transform core of $4 \times 4$ transform (such as LFNST) is applied to blocks of which at least one of the width or the height is less than 16. Furthermore, the transform core of $8 \times 8$ transform (such as LFNST) is applied to larger blocks, such as blocks of which both the width and the height are greater than 8.

Based on the above descriptions, in a possible implementation of the embodiment, in a case that at least one of a width of the current block or a height of the current block is less than 16, it is determined that the size of the transform core corresponding to the current block is $4 \times 4$, and then a correspondence, corresponding to the $4 \times 4$ transform core, between the preset prediction block gradients and the transform cores is obtained. Then, the target transform core corresponding to the gradient information of the prediction block is determined from the correspondence corresponding to the $4 \times 4$ transform core, and the target transform core is determined to be the transform core corresponding to the current block.

In another possible implementation of the embodiment, in a case that each of the width of the current block and the height of the current block is greater than 8, it is determined that the size of the transform core corresponding to the current block is $8 \times 8$, and then a correspondence, corresponding to the $8 \times 8$ transform core, between the preset prediction block gradients and the transform cores is obtained. Then, the target transform core corresponding to the gradient information of the prediction block is determined from the correspondence corresponding to the $8 \times 8$ transform core, and the target transform core is determined to be the transform core corresponding to the current block.

A process of determining the transform core corresponding to the current block according to the texture information of the prediction block is introduced as above.

In some embodiments, the transform core corresponding to the current block may also be determined according to the neural network model.

That is, the above S403 includes the following operations S403-1 and S403-2.

At S403-1, the prediction block is input into a pre-trained model, to obtain transform core indication information output by the model and corresponding to the current block, the transform core indication information is configured to indicate a transform core corresponding to the current block, and the transform core corresponding to the current block may be a transform core or a set of transform cores.

At S403-2, the transform core corresponding to the current block is determined according to the transform core indication information.

In this mode, the model used is pre-trained. During training, the prediction block of the picture block is used as input, and a true value of the transform core indication information corresponding to the picture block is used as a constraint to train the model. The trained model may predict the transform core. In this way, the decoding side may input the prediction block into the trained model, to obtain the transform core indication information output by the model and corresponding to the current block. The transform core indication information is configured to indicate a transform core corresponding to the current block, and then the transform core corresponding to the current block is determined according to the transform core indication information. It should be noted that specific network structure of the model is not limited in the embodiments of the disclosure, for example, it may be any picture recognition neural network such as a picture convolutional neural network, an adversarial neural network, etc.

In some embodiments, in order to reduce amount of calculation and complexity of the model, before the prediction block is input into the model, the prediction block is down-sampled first to reduce amount of data and complexity of the prediction block, and then the down-sampled prediction block is input into the pre-trained model, which may improve efficiency of the model predicting the transform core indication information corresponding to the current block.

The above operations introduce a process of determining the transform core corresponding to the current block according to the prediction block of the current block. After determining the transform core corresponding to the current block, the following operation S404 is performed.

At S404, inverse transform is performed on the target transform coefficient according to the transform core, and a residual block of the current block is obtained according to a transform result of the inverse transform.

In some embodiments, if the above target transform coefficient is a primary transform coefficient, inverse transform is performed on the target transform coefficient by using the transform core, to obtain the residual block of the current block.

In some embodiments, if the above target transform coefficient is a coefficient after secondary transform, the above S404 includes the following operations S404-A1 and S404-A2.

At S404-A1, inverse secondary transform is performed on the target transform coefficient according to the transform core, to obtain a primary transform coefficient of the current block.

At S404-A2, inverse primary transform is performed on the primary transform coefficient, to obtain the residual block of the current block.

Modes of performing inverse transform on the target transform coefficient according to the transform core, to obtain the primary transform coefficient of the current block are not limited in the embodiments of the disclosure.

For example, the primary transform coefficient of the current block is obtained according to the following formula (7):

$$\vec{F} = T \cdot \vec{X} \qquad (7)$$

where $\vec{F}$ is the target transform coefficient of the current block, T is the transform core which is a transform matrix, and $\vec{X}$ is the primary transform coefficient of the current block.

According to the above formula (7), inverse secondary transform may be performed on the target transform coefficient based on the transform core, to obtain the primary transform coefficient of the current block.

It should be noted that the above formula (7) is just an example, and implementations of the above S404 include, but are not limited to what shown in the above formula (7).

Then, inverse primary transform is performed on the primary transform coefficient, to obtain the residual block of the current block.

Specifically, according to modes used for primary transform, inverse primary transform is performed on the primary transform coefficient, to obtain the residual block of the current block.

In an example, if the encoding side uses the DCT-II transform mode shown in the above formula (1) to perform primary transform on the residual block of the current block, the decoding side uses the DCT-II transform mode shown in the above formula (1) to perform inverse primary transform on the above primary transform coefficient, to obtain the residual block of the current block.

In another example, if the encoding side uses the DCT-VIII transform mode shown in the above formula (2) to perform primary transform on the residual block of the current block, the decoding side uses the DCT-VIII transform mode shown in the above formula (2) to perform inverse primary transform on the above primary transform coefficient, to obtain the residual block of the current block.

In another example, if the encoding side uses the DST-VII transform mode shown in the above formula (3) to perform primary transform on the residual block of the current block, the decoding side uses the DST-VII transform mode shown in the above formula (3) to perform inverse primary transform on the above primary transform coefficient, to obtain the residual block of the current block.

According to the above operations, after obtaining the residual block of the current block, the prediction block is added to the residual block, to obtain the reconstruction block of the current block.

According to the decoding method of the embodiment of the disclosure, a target transform coefficient of a current block is obtained by decoding a bitstream; the current block is predicted to obtain a prediction block of the current block; a transform core corresponding to the current block is determined according to the prediction block; inverse transform is performed on the target transform coefficient according to the transform core, and a residual block of the current block is obtained according to a transform result of the inverse transform. That is, according to the disclosure, selection of the transform core is determined or guided or assisted by characteristics of the prediction block based on correlation between textures of the residual and of the prediction block itself, which improves compression efficiency of the current block while reduces transmission of selection information for the transform core in the bitstream and reduces overhead of the transform in the bitstream

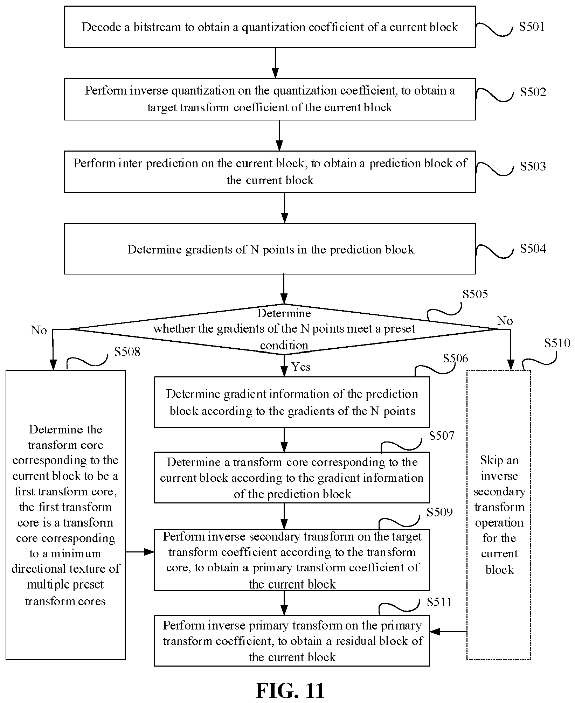

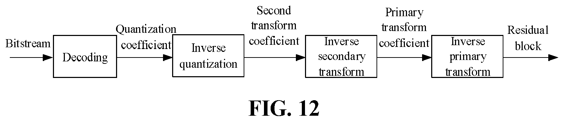

The decoding method of the embodiment of the disclosure will be further described below with reference to FIG. 11 and FIG. 12, by taking inter secondary transform as an example.

FIG. 11 is another schematic flowchart of a method for video decoding provided by an embodiment of the disclosure, and FIG. 12 is a schematic diagram of a video decoding process related to an embodiment of the disclosure. As shown in FIG. 11 and FIG. 12, the method includes the following operations S501 to S511.

At S501, a bitstream is decoded to obtain a quantization coefficient of a current block.

The encoding side quantizes a target transform coefficient after secondary transform to form the quantization coefficient, and encodes the quantization coefficient to form the bitstream. Correspondingly, after receiving the bitstream, the decoding side decodes the bitstream to obtain the quantization coefficient of the current block.

At S502, inverse quantization is performed on the quantization coefficient, to obtain a target transform coefficient of the current block.

Specifically, a quantization mode is determined, and inverse quantization is performed on the quantization coefficient by using the determined quantization mode, to obtain the target transform coefficient of the current block.

Modes for the decoding side to determine the quantization mode may be the following first to third modes.

First mode: if the bitstream includes indication information of the quantization mode, the decoding side obtains the indication information of the quantization mode by decoding the bitstream, and determines the quantization mode of the current block according to the indication information.

Second mode: the decoding side uses a default quantization mode.

Third mode: the decoding side uses the same mode as the encoding side, to determine the quantization mode of the current block.

At S503, inter prediction is performed on the current block, to obtain a prediction block of the current block.

An implementation process of the above S503 may refer to descriptions of the above S402, which are not elaborated here.

At S504, gradients of N points in the prediction block are determined.

An implementation process of the above S504 may refer to descriptions of the above S403-A11, which are not elaborated here.

At S505, it is determined whether the gradients of the N points meet a preset condition.

In an actual application, when the prediction block has apparent directional texture, the residual block has apparent directional texture. If the prediction block does not have apparent directional texture, there is a large probability that the residual block does not have apparent directional texture, either. On the above basis, in order to reduce unnecessary calculation of gradient information of the prediction block, after determining the gradients of the N points, it is determined whether the gradients of the N points meet the preset condition first. When the gradients of the N points meet the preset condition, S506 is performed to calculate the gradient information of the prediction block. When the gradients of the N points do not meet the preset condition, the gradient information of the prediction block is not calculated, instead, S508, S509 and S511 are performed, or operations S510 and S511 are performed.

In some embodiments, the above preset condition includes at least one of the following first or second condition.

First condition: at least one of a sum of gradients in a horizontal direction or a sum of gradients in a vertical direction is equal to or greater than a first preset value.

Second condition: at least one of gradients of at least M points in the horizontal direction or the vertical direction is equal to or greater than a second preset value, M is a positive integer less than or equal to N.

Specifically, if the gradients of the N points meet at least one of the above first or second condition, for example, when at least one of a sum of the gradients of the N points in the horizontal direction or a sum of the gradients of the N points in the vertical direction is equal to or greater than the first preset value, and/or when at least one of gradients of at least M points of the N points in the horizontal direction or the vertical direction is equal to or greater than the second preset value, it means that the prediction block has apparent texture, and when the prediction block has apparent texture, the residual block also has apparent texture. At this time, the decoding side performs the following operations S504, S505, S506, S509 and S511, that is, the decoding side calculates the gradient information of the prediction block, and determines the transform core corresponding to the current block according to the gradient information of the prediction block, and performs inverse secondary transform on the target transform coefficient according to the transform core, to obtain a primary transform coefficient of the current block, and then performs inverse primary transform on the primary transform coefficient, to obtain a residual block of the current block.

When each of the sum of the gradients of the N points in the horizontal direction and the sum of the gradients of the N points in the vertical direction is less than the first preset value, and/or when each of gradients of at least M points of the N points in the horizontal direction and the vertical direction is less than the second preset value, it means that the prediction block does not have apparent texture, and when the prediction block does not have apparent texture, the residual block does not have apparent texture, either. At this time, decoding modes of the decoding side include at least the following two modes.

First mode: the decoding side performs S508, S509 and S511, that is, the decoding side determines the transform core corresponding to the current block to be a first transform core, the first transform core is a transform core corresponding to a minimum directional texture of multiple preset transform cores of secondary transform, such as the transform core set 0. Then, the decoding side performs inverse secondary transform on the target transform coefficient according to the first transform core, to obtain a primary transform coefficient of the current block, and then performs inverse primary transform on the primary transform coefficient, to obtain the residual block of the current block.

Second mode: the decoding side performs operations S510 and S511, that is, the decoding side skips an inverse secondary transform operation for the current block, directly uses the above target transform coefficient as a primary transform coefficient of the current block, and performs inverse primary transform on the primary transform coefficient, to obtain the residual block of the current block.

At S506, gradient information of the prediction block is determined according to the gradients of the N points.

At S507, a transform core corresponding to the current block is determined according to the gradient information of the prediction block.

Implementation processes of the above S504 and S505 may refer to implementations of the above S403-A12 and S403-B1, which are not elaborated here.

At S508, the transform core corresponding to the current block is determined to be a first transform core, the first transform core is a transform core corresponding to a minimum directional texture of multiple preset transform cores.

For example, the first transform core is the transform core set 0 in Table 1.

At S509, inverse secondary transform is performed on the target transform coefficient according to the transform core, to obtain a primary transform coefficient of the current block.

An implementation process of the above S507 may refer to implementation of the above S404, which is not elaborated here.

At S510, an inverse secondary transform operation for the current block is skipped.

At S511, inverse primary transform is performed on the primary transform coefficient, to obtain a residual block of the current block.

An implementation process of the above S511 may refer to implementation of the above S405, which is not elaborated here.

It should be noted that the decoding method of the disclosure is described as above by taking inter secondary transform as an example. With regard to intra secondary transform, the above modes may also be used for decoding, please refer to the above operations for details, which are not elaborated here.

According to the decoding method of the embodiment of the disclosure, a quantization coefficient of a current block is obtained by decoding a bitstream; inverse quantization is performed on the quantization coefficient, to obtain a target transform coefficient of the current block; inter prediction is performed on the current block, to obtain a prediction block of the current block; gradients of N points in the prediction block are determined; it is determined whether the gradients of the N points meet a preset condition; when the gradients of the N points meet the preset condition, gradient information of the prediction block is determined according to the gradients of the N points; a transform core corresponding to the current block is determined according to the gradient information of the prediction block; inverse secondary transform is performed on the target transform coefficient according to the transform core, to obtain a primary transform coefficient of the current block; finally, inverse primary transform is performed on the primary transform coefficient, to obtain a residual block of the current block. When the gradients of N points meet the preset condition, the transform core corresponding to the current block is determined to be a first transform core, the first transform core is a transform core corresponding to a minimum directional texture of multiple preset transform cores; inverse secondary transform is performed on the target transform coefficient by using the first transform core, to obtain a primary transform coefficient of the current block; finally, inverse primary transform is performed on the primary transform coefficient, to obtain the residual block of the current block. Alternatively, when the gradients of the N points meet the preset condition, an inverse secondary transform operation for the current block is skipped, the target transform coefficient is directly used as a primary transform coefficient, and inverse primary transform is performed on the primary transform coefficient, to obtain the residual block of the current block. That is, according to the disclosure, size of the texture of the prediction block of the current block is determined according to the gradients of the N points. When the texture of the prediction block is large, it means that the residual block has apparent texture; at this time, the transform core corresponding to the current block is determined through the prediction block, and inverse transform is performed on the target transform coefficient, so that accurate decoding of the current block may be achieved. When the texture of the prediction block is small, it means that the residual block does not have apparent texture; at this time, inverse secondary transform is skipped, or the current block is configured to correspond to a transform core without apparent texture, to prevent excessive inverse secondary transform performed on the current block, thereby improving accuracy of inverse transform of the current block and improving decoding efficiency.

The decoding method of the embodiment of the disclosure is introduced as above. On the above basis, an encoding method provided by an embodiment of the disclosure is introduced below.

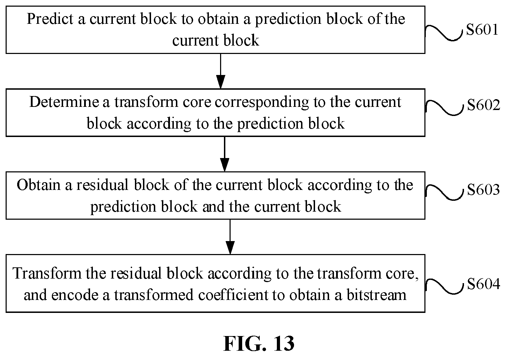

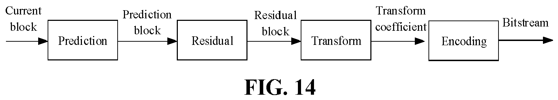

FIG. 13 is a schematic flowchart of a method for video encoding provided by an embodiment of the disclosure, and FIG. 14 is a schematic diagram of a video encoding process related to an embodiment of the disclosure. The embodiment of the disclosure is applied to the video encoder shown in FIG. 1 and FIG. 2. As shown in FIG. 13 and FIG. 14, the method of the embodiment of the disclosure includes the following operations S601 to S604.

At S601, a current block is predicted to obtain a prediction block of the current block.

During video encoding, the video encoder receives a video stream which is composed of a series of picture frames, video encoding is performed on each frame of pictures in the video stream, and the video encoder divides the picture frames into blocks to obtain the current block.

In some embodiments, the current block may also be referred to as a current coding block, a current picture block, a coding block, a current coding unit, a current to-be-coded block, a current to-be-coded picture block, etc.

During block division, a block divided by traditional methods contains both a chroma component at position of the current block and a luma component at the position of the current block. Furthermore, a dual tree technology may divide blocks with separate component, such as separate luma blocks and separate chroma blocks. The luma block may be understood as containing only the luma component at the position of the current block, and the chroma block may be understood as containing only the chroma component at the position of the current block. In this way, luma component and chroma component at the same position may belong to different blocks, and the division may be more flexible. If the dual tree is used in CU division, some CUs contain both luma and chroma components, some CUs contain only the luma component, and some CUs contain only the chroma component.

In some embodiments, the current block in the embodiment of the disclosure includes only the chroma component, and may be understood as a chroma block.

In some embodiments, the current block in the embodiment of the disclosure includes only the luma component, and may be understood as a luma block.

In some embodiments, the current block includes both luma and chroma components.

In some embodiments, when the methods of the embodiments of the disclosure are applied to intra prediction, intra prediction is performed on the current block, to obtain the prediction block of the current block. Prediction modes used to perform intra prediction on the current block are not limited in the embodiments of the disclosure, and in particular, are determined according to actual situations.

In some embodiments, when the methods of the embodiments of the disclosure are applied to inter prediction, inter prediction is performed on the current block, to obtain the prediction block of the current block. Prediction modes used to perform inter prediction on the current block are not limited in the embodiments of the disclosure, and in particular, are determined according to actual situations. For example, when the video encoder performs inter prediction on the current block, the video encoder may try at least one of multiple inter prediction modes, select an inter prediction mode with a minimum rate-distortion cost as a target inter prediction mode, and use the target inter prediction mode to perform inter coding on the current block, to obtain the prediction block of the current block.

At S602, a transform core corresponding to the current block is determined according to the prediction block.

Since there is certain correlation between textures of the residual block and of the prediction block: taking inter coding as an example, with regard to blocks using inter coding, there is certain correlation between textures of the residual block and of the prediction block itself of inter prediction. For example, residuals usually appear at edges of an object, and the edges of the object show apparent gradient features in the prediction block. For another example, with regard to gradient textures such as wrinkles in clothes, textures of residuals usually have the same or similar direction as textures in the prediction block. Therefore, in the embodiments of the disclosure, selection of the transform core is determined or guided or assisted according to characteristics of the prediction block.

The transform core corresponding to the current block determined in the embodiments of the disclosure may be a transform core or a set of transform cores. Here, a set of transform cores includes at least two transform cores.

In some embodiments, the above S602 includes the following operations S602-A and S602-B.

At S602-A, texture information of the prediction block is determined.

At S602-B, the transform core corresponding to the current block is determined according to the texture information of the prediction block.

The texture information of the prediction block includes any information which may represent texture characteristics of the prediction block, such as a texture direction of the prediction block, a texture size of the prediction block, etc.

In some embodiments, the above S602-A includes the following operation S602-A1.

At S602-A1, the gradient information of the prediction block is determined.

Correspondingly, the above S602-B includes the following operation S602-B1.

At S602-B1, the transform core corresponding to the current block is determined according to the gradient information of the prediction block.

A process of determining the gradient information of the prediction block in the above S602-A1 will be introduced in detail below.

The gradient information of the prediction block includes at least one of a gradient direction or a gradient size of the prediction block.

Modes of determining the gradient information of the prediction block in the above S602-A1 include, but are not limited to the following first and second modes.

First mode: the gradient information of the prediction block is determined by way of a neural network model.

Second mode: the gradient information of the prediction block may be determined by gradients of all or part of pixels in the prediction block. In the second mode, the above S602-A1 includes the following operations S602-A11 and S602-A12.

At S602-A11, gradients of N points in the prediction block are determined, N is a positive integer.

At S602-A12, the gradient information of the prediction block is determined according to the gradients of the N points.

Optionally, the above N points may be all the pixels in the prediction block.

Optionally, the above N points may be part of the pixels in the prediction block.

In an example, since pixels at an outermost layer in the prediction block are greatly affected by other picture blocks and have poor stability: in order to improve accuracy of determining the gradient information of the prediction block, the N points configured to determine the gradient information of the prediction block is selected as pixels in the prediction block other than pixels at an outermost layer.

In an example, the above N points are pixels obtained by using a certain sampling mode to sample pixels in the prediction block, for example, sample every other pixel once.

Optionally, the gradient of at least one of the N points includes a horizontal gradient and/or a vertical gradient.

In some embodiments, the above S602-A11 includes the following operations S602-A111 and S602-A112.

At S602-A111, for an i-th point of the N points, a horizontal gradient of the i-th point is determined according to pixel values of adjacent points of the i-th point in a horizontal direction of the prediction block.

At S602-A112, a vertical gradient of the i-th point is determined according to pixel values of adjacent points of the i-th point in a vertical direction of the prediction block.

In some embodiments, in a case that the adjacent points of the i-th point in the horizontal direction of the prediction block include a left adjacent point and a right adjacent point of the i-th point in the horizontal direction of the prediction block, a ratio of a difference value between a pixel value of the right adjacent point and a pixel value of the left adjacent point to 2 is determined to be the horizontal gradient of the i-th point.

The above S602-A112 of determining the vertical gradient of the i-th point according to the pixel values of the adjacent points of the i-th point in the vertical direction of the prediction block is not limited in the embodiments of the disclosure.

In a mode, in a case that the adjacent points of the i-th point in the vertical direction of the prediction block include an upper adjacent point and a lower adjacent point of the i-th point in the vertical direction of the prediction block, a ratio of a difference value between a pixel value of the lower adjacent point and a pixel value of the upper adjacent point to 2 is determined to be the vertical gradient of the i-th point.

The gradients of the N points in the prediction block are determined according to the above modes. Then, S602-A12 is performed to determine the gradient information of the prediction block according to the gradients of the N points.

In some embodiments, modes of determining the gradient information of the prediction block according to the gradients of the N points in the above S602-A12 include, but are not limited to the following first and second modes.

First mode: the gradients of the N points are determined to be the gradient information of the prediction block.

Second mode: a sum of horizontal gradients of the N points, grad_hor_sum is determined; a sum of vertical gradients of the N points, grad_ver_sum is determined; and the gradient information of the prediction block, grad_para is determined according to the sum of horizontal gradients of the N points and the sum of vertical gradients of the N points.

For example, the gradient information of the prediction block is determined according to a ratio of the sum of horizontal gradients of the N points, grad_hor_sum to the sum of vertical gradients of the N points, grad_ver_sum, that is, grad_para = grad_hor_sum/grad_ver_sum.

In some embodiments, in a case that the sum of vertical gradients of the N points, grad_ver_sum is 0, the gradient information of the prediction block, grad_para is determined to be 0.

After determining the gradient information of the prediction block according to the above methods, S602-B1 is performed, that is, the transform core corresponding to the current block is determined according to the gradient information of the prediction block.

In some embodiments, the above S602-B1 includes the following operations S602-B11 to S602-B13.

At S602-B11, a correspondence between preset prediction block gradients and transform cores is obtained.

At S602-B12, a target transform core corresponding to the gradient information of the prediction block is determined from the correspondence.

At S602-B13, the target transform core is determined to be the transform core corresponding to the current block.

In some embodiments, sizes of transform cores corresponding to different sizes of blocks are also different. On the above basis, the above S602-B11 includes the following operations S602-B111 and S602-B112.

At S602-B111, a size of the transform core corresponding to the current block is determined according to a size of the current block.

At S602-B112, a correspondence, corresponding to the size of the transform core, between the preset prediction block gradients and the transform cores is obtained according to the size of the transform core corresponding to the current block.

Correspondingly, the above S602-B12 includes the following operation S602-B121.

At S602-B121, the target transform core corresponding to the gradient information of the prediction block is determined from the correspondence corresponding to the size of the transform core.

In some embodiments, considering that the residual of inter coding is statistically simpler than the residual of intra coding, application situations of inter may be different from those of intra. For example, the transform core of 4×4 secondary transform (such as LFNST) is applied to blocks of which at least one of the width or the height is less than 16. Furthermore, the transform core of 8×8 secondary transform (such as LFNST) is applied to larger blocks, such as blocks of which both the width and the height are greater than 8.

Based on the above descriptions, in a possible implementation of the embodiment, in a case that at least one of a width of the current block or a height of the current block is less than 16, it is determined that the size of the transform core corresponding to the current block is 4×4, and then a correspondence, corresponding to the 4×4 transform core, between the preset prediction block gradients and the transform cores is obtained. Then, the target transform core corresponding to the gradient information of the prediction block is determined from the correspondence corresponding to the 4×4 transform core, and the target transform core is determined to be the transform core corresponding to the current block.

In another possible implementation of the embodiment, in a case that each of the width of the current block and the height of the current block is greater than 8, it is determined that the size of the transform core corresponding to the current block is 8×8, and then a correspondence, corresponding to the 8×8 transform core, between the preset prediction block gradients and the transform cores is obtained. Then, the target transform core corresponding to the gradient information of the prediction block is determined from the correspondence corresponding to the 8×8 transform core, and the target transform core is determined to be the transform core corresponding to the current block.

A process of determining the transform core corresponding to the current block according to the texture information of the prediction block is introduced as above.

In some embodiments, the transform core corresponding to the current block may also be determined according to the neural network model.

That is, the above S602 includes the following operations S602-1 and S602-2.

At S602-1, the prediction block is input into a pre-trained model, to obtain transform core indication information output by the model and corresponding to the current block, the transform core indication information is configured to indicate a transform core corresponding to the current block.

At S602-2, the transform core corresponding to the current block is determined according to the transform core indication information.

In this mode, the model used is pre-trained. During training, the prediction block of the picture block is used as input, and a true value of the transform core indication information corresponding to the picture block is used as a constraint to train the model. The trained model may predict the transform core. In this way, the encoding side may input the prediction block into the trained model, to obtain the transform core indication information output by the model and corresponding to the current block. The transform core indication information is configured to indicate a transform core corresponding to the current block, and then the transform core corresponding to the current block is determined according to the transform core indication information. It should be noted that specific network structure of the model is not limited in the embodiments of the disclosure, for example, it may be any picture recognition neural network such as a picture convolutional neural network, an adversarial neural network, etc.

In some embodiments, in order to reduce amount of calculation and complexity of the model, before the prediction block is input into the model, the prediction block is down-sampled first to reduce amount of data and complexity of the prediction block, and then the down-sampled prediction block is input into the pre-trained model, which may improve efficiency of the model predicting the transform core indication information corresponding to the current block.

It should be noted that an implementation process of the above S602 is substantially the same as that of the above S403, and may refer to descriptions of the above S403, which are not elaborated here.

The above operations introduce a process of determining the transform core corresponding to the current block according to the prediction block of the current block. After determining the transform core corresponding to the current block, the following operations S603 and S604 are performed.

At S603, a residual block of the current block is obtained according to the prediction block and the current block.

For example, a pixel value of the prediction block is subtracted from a pixel value of the current block, to obtain the residual block of the current block.

It should be noted that the above S603 and the above S602 are implemented without a specific order, that is, the above S603 may be performed before the above S602, or may be performed after the above S602, or may be performed simultaneously with the above S602, which are not limited in the disclosure.

At S604, the residual block is transformed according to the transform core, and a transformed coefficient is encoded to obtain a bitstream.

In some embodiments, the residual block is transformed according to the transform core, to obtain a transformed coefficient, and the transformed coefficient is transformed to obtain the bitstream.

In some embodiments, the residual block is transformed according to the transform core, to obtain a transformed coefficient, and the transformed coefficient is quantized, and the quantized coefficient is encoded to obtain the bitstream.

In some embodiments, the above S604 includes the following operations S604-A1 to S604-A3.

At S604-A1, primary transform is performed on the residual block, to obtain a primary transform coefficient of the current block.

At S604-A2, secondary transform is performed on the primary transform coefficient according to the transform core, to obtain a target transform coefficient of the current block.

At S604-A3, the target transform coefficient is encoded to obtain the bitstream.

In an example, the encoding side uses the DCT-II transform mode shown in the above formula (1) to perform primary transform on the residual block of the current block, to obtain the primary transform coefficient of the current block.

In another example, the encoding side uses the DCT-VIII transform mode shown in the above formula (2) to perform primary transform on the residual block of the current block, to obtain the primary transform coefficient of the current block.

In another example, the encoding side uses the DST-VII transform mode shown in the above formula (3) to perform primary transform on the residual block of the current block, to obtain the primary transform coefficient of the current block.

Then, secondary transform is performed on the primary transform coefficient according to the transform core, to obtain the target transform coefficient of the current block.

Modes of performing inverse secondary transform on the target transform coefficient according to the transform core, to obtain the primary transform coefficient of the current block are not limited in the embodiments of the disclosure.

For example, according to the above formula (7), secondary transform is performed on the primary transform coefficient by using the transform core, to obtain the target transform coefficient of the current block, that is, a product of the transform core and the primary transform coefficient is used as the target transform coefficient of the current block.

The target transform coefficient is encoded to obtain the bitstream.

In an example, the target transform coefficient of the current block is directly encoded without quantization, to obtain the bitstream.

In an example, the target transform coefficient of the current block is quantized to obtain a quantization coefficient, and the quantization coefficient is encoded to obtain the bitstream.

In some embodiments, if the transform core corresponding to the current block is a set of transform cores, the encoding side may indicate to the decoding side: which transform core of the set of transform cores is used by the encoding side specifically. Optionally, the indication information may be carried in the bitstream.

In some embodiments, the encoding side may also carry indication information of the current block using secondary transform in the bitstream, so that the decoding side may perform the decoding method of the embodiment of the disclosure when it is determined that the current block uses secondary transform according to the indication information.

According to the coding method of the embodiment of the disclosure, a prediction block of a current block is obtained by predicting the current block; a transform core corresponding to the current block is determined according to the prediction block; a residual block of the current block is obtained according to the prediction block and the current block; the residual block is transformed according to the transform core, and a transformed coefficient is encoded to obtain a bitstream. That is, according to the disclosure, selection of the transform core is determined or guided or assisted by characteristics of the prediction block based on correlation between textures of the residual and of the prediction block itself, which improves compression efficiency of the current block while reduces transmission of selection information for the transform core in the bitstream and reduces overhead of the transform in the bitstream.

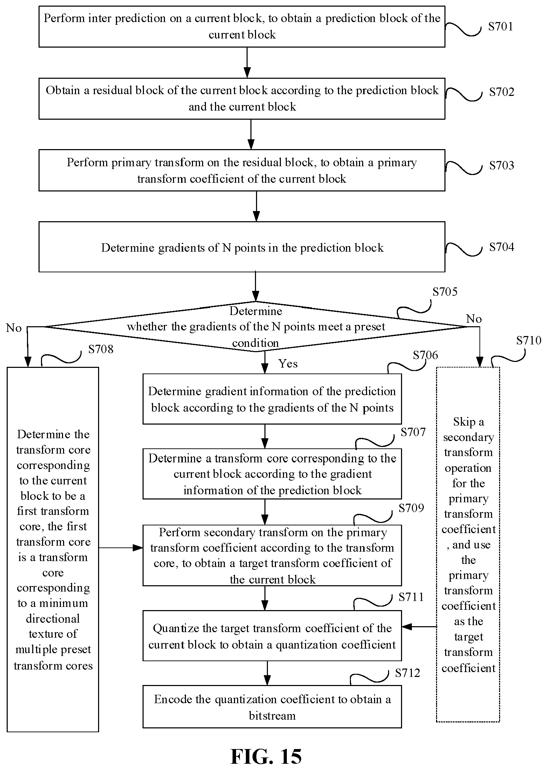

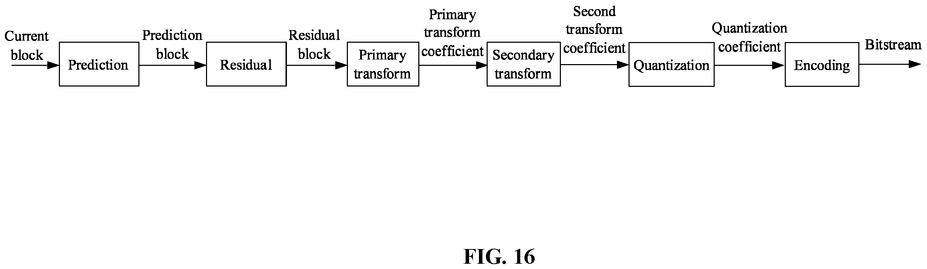

The encoding method of the embodiment of the disclosure will be further described below with reference to FIG. 15 and FIG. 16, by taking inter secondary transform as an example.

FIG. 15 is another schematic flowchart of a method for video encoding provided by an embodiment of the disclosure, and FIG. 16 is a schematic diagram of a video encoding process related to an embodiment of the disclosure. The embodiment of the disclosure is applied to the video encoder shown in FIG. 1 and FIG. 2. As shown in FIG. 15 and FIG. 16, the method of the embodiment of the disclosure includes the following operations S701 to S712.

At S701, inter prediction is performed on a current block, to obtain a prediction block of the current block.

An implementation process of the above S701 is consistent with the above S601, please refer to descriptions of the above S601, which are not elaborated here.

At S702, a residual block of the current block is obtained according to the prediction block and the current block.

For example, a pixel value of the prediction block is subtracted from a pixel value of the current block, to obtain the residual block of the current block.

At S703, primary transform is performed on the residual block, to obtain a primary transform coefficient of the current block.

An implementation process of the above S703 is consistent with the above S604, please refer to descriptions of the above S604, which are not elaborated here.

It should be noted that the above S703 and the above S702 are implemented without a specific order, that is, the above S703 may be performed before the above S702, or may be performed after the above S702, or may be performed simultaneously with the above S702, which are not limited in the disclosure.

At S704, gradients of N points in the prediction block are determined.

Please refer to descriptions of the above S602-A11 for details, which are not elaborated here.

At S705, it is determined whether the gradients of the N points meet a preset condition.

In an actual application, when the prediction block has apparent directional texture, the residual block has apparent directional texture. If the prediction block does not have apparent directional texture, there is a large probability that the residual block does not have apparent directional texture, either. On the above basis, in order to reduce unnecessary calculation of gradient information of the prediction block, after determining the gradients of the N points, it is determined whether the gradients of the N points meet the preset condition first. When the gradients of the N points meet the preset condition, S706 is performed to calculate the gradient information of the prediction block. When the gradients of the N points do not meet the preset condition, the gradient information of the prediction block is not calculated, instead, S708, S709, S711 and S712 are performed, or operations S710, S711 and S712 are performed.

In some embodiments, the above preset condition includes at least one of the following first or second condition.

First condition: at least one of a sum of gradients in a horizontal direction or a sum of gradients in a vertical direction is equal to or greater than a first preset value.

Second condition: at least one of gradients of at least M points in the horizontal direction or the vertical direction is equal to or greater than a second preset value, M is a positive integer less than or equal to N.

Specifically, if the gradients of the N points meet at least one of the above first or second condition, for example, when at least one of a sum of the gradients of the N points in the horizontal direction or a sum of the gradients of the N points in the vertical direction is equal to or greater than the first preset value, and/or when at least one of gradients of at least M points of the N points in the horizontal direction or the vertical direction is equal to or greater than the second preset value, it means that the prediction block has apparent texture, and when the prediction block has apparent texture, the residual block also has apparent texture. At this time, the encoding side performs the following operations S706, S707, S709, S711 and S712, that is, the encoding side calculates the gradient information of the prediction block, and determines the transform core corresponding to the current block according to the gradient information of the prediction block, and performs secondary transform on the primary transform coefficient according to the transform core, to obtain a target transform coefficient of the current block, and then quantizes the target transform coefficient to obtain a quantization coefficient, finally, encodes the quantization coefficient to obtain the bitstream.

When each of the sum of the gradients of the N points in the horizontal direction and the sum of the gradients of the N points in the vertical direction is less than the first preset value, and/or when each of gradients of at least M points of the N points in the horizontal direction and the vertical direction is less than the second preset value, it means that the prediction block does not have apparent texture, and when the prediction block does not have apparent texture, the residual block does not have apparent texture, either. At this time, coding modes of the encoding side include at least the following two modes.

First mode: the encoding side performs S708, S709, S711 and S712, that is, the encoding side determines the transform core corresponding to the current block to be a first transform core, the first transform core is a transform core corresponding to a minimum directional texture of multiple preset transform cores, such as the transform core set 0. Then, the encoding side performs secondary transform on the primary transform coefficient according to the first transform core, to obtain a target transform coefficient of the current block, and then quantizes the target transform coefficient to obtain a quantization coefficient, finally, encodes the quantization coefficient to obtain the bitstream.

Second mode: the encoding side performs operations S710, S711 and S712, that is, the encoding side skips a secondary transform operation for the primary transform coefficient, directly uses the above primary transform coefficient as a target transform coefficient of the current block, and quantizes the target transform coefficient to obtain a quantization coefficient, finally, encodes the quantization coefficient to obtain the bitstream.

At S706, gradient information of the prediction block is determined according to the gradients of the N points.

At S707, a transform core corresponding to the current block is determined according to the gradient information of the prediction block.

Implementation processes of the above S707 and S707 may refer to implementations of the above S602-A12 and S602-B1, which are not elaborated here.

At S708, the transform core corresponding to the current block is determined to be a first transform core, the first transform core is a transform core corresponding to a minimum directional texture of multiple preset transform cores.

For example, the first transform core is the transform core set 0 in VVC.

At S709, secondary transform is performed on the primary transform coefficient according to the transform core, to obtain a target transform coefficient of the current block.

An implementation process of the above S709 may refer to implementation of the above S605, which is not elaborated here.

At S710, a secondary transform operation for the primary transform coefficient is skipped, and the primary transform coefficient is used as the target transform coefficient.

At S711, the target transform coefficient of the current block is quantized to obtain a quantization coefficient.

At S712, the quantization coefficient is encoded to obtain a bitstream.

It should be noted that the coding method of the disclosure is described as above by taking inter secondary transform as an example. With regard to intra secondary transform, the above modes may also be used for coding, please refer to the above operations for details, which are not elaborated here.

According to the method for video encoding provided by the embodiment of the disclosure, a prediction block of a current block is obtained by performing inter prediction on the current block; a residual block of the current block is obtained according to the current block and the prediction block of the current block; primary transform is performed on the residual block, to obtain a primary transform coefficient of the current block; gradients of N points in the prediction block are determined; it is determined whether the gradients of the N points meet a preset condition; when the gradients of the N points meet the preset condition, gradient information of the prediction block is determined according to the gradients of the N points; a transform core corresponding to the current block is determined according to the gradient information of the prediction block; secondary transform is performed on the primary transform coefficient according to the transform core, to obtain a target transform coefficient of the current block; finally, the target transform coefficient of the current block is quantized to obtain a quantization coefficient, and the quantization coefficient is encoded to obtain a bitstream. When the gradients of the N points do not meet the preset condition, the transform core corresponding to the current block is determined to be a first transform core, the first transform core is a transform core corresponding to a minimum directional texture of multiple preset transform cores, and secondary transform is performed on the primary transform coefficient by using the first transform core, to obtain a target transform coefficient of the current block, then the target transform coefficient of the current block is quantized to obtain a quantization coefficient, and the quantization coefficient is encoded to obtain the bitstream. Alternatively, when the gradients of the N points do not meet the preset condition, a secondary transform operation for the primary transform coefficient is skipped, the primary transform coefficient is used as a target transform coefficient, the target transform coefficient of the current block is quantized to obtain a quantization coefficient, and the quantization coefficient is encoded to obtain the bitstream. That is, according to the disclosure, size of the texture of the prediction block of the current block is determined according to the gradients of the N points. When the texture of the prediction block is large, it means that the residual block has apparent texture; at this time, the transform core corresponding to the current block is determined through the prediction block, and secondary transform is performed on the primary transform coefficient by using the transform core, to improve picture compression efficiency. When the texture of the prediction block is small, it means that the residual block does not have apparent texture; at this time, secondary transform is skipped, or the current block is configured to correspond to a transform core without apparent texture, to prevent excessive transform performed on the current block, thereby improving transform accuracy of the current block and improving coding efficiency.

It should be understood that FIG. 9 to FIG. 16 are only examples of the disclosure, and should not be understood as limitation of the disclosure.

Preferred implementations of the disclosure have been described in detail as above with reference to the drawings. However, the disclosure is not limited to specific details of the above implementations. Within the scope of the technical concept of the disclosure, various simple modifications may be made to the technical solutions of the disclosure, and all these simple modifications belong to the scope of protection of the disclosure. For example, specific technical features described in the above specific implementations may be combined in any suitable way without conflict. In order to avoid unnecessary repetition, various possible combination modes will not be described in the disclosure any more. For another example, various different implementations of the disclosure may also be arbitrarily combined there-between, as long as they do not depart from the idea of the disclosure, and they should also be considered as contents disclosed in the disclosure.

It should also be understood that in various method embodiments of the disclosure, sizes of serial numbers of the above process does not mean an order of execution. The execution order of each process should be determined by its function and internal logic, and should not constitute any limitation to implementation of the embodiments of the disclosure. Furthermore, in the embodiments of the disclosure, a term "and/or" is only an association relationship describing associated objects, and indicates that three relationships may exist. Specifically, A and/or B may indicate three situations: A exists alone, A and B exist simultaneously, and B exists alone. Furthermore, a character "/" here usually indicates that anterior and posterior associated objects are in a "or" relationship.

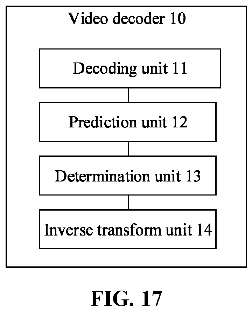

The method embodiments of the disclosure are described in detail as above with reference to FIG. 9 to FIG. 16, and apparatus embodiments of the disclosure are described in detail below with reference to FIG. 17 to FIG. 20.

FIG. 17 is a schematic block diagram of a video decoder provided by an embodiment of the disclosure.

As shown in FIG. 17, the video decoder 10 includes a decoding unit 11, a PU 12, a determination unit 13, and an inverse TU 14.

The decoding unit 11 is configured to decode a bitstream to determine a target transform coefficient of a current block.

The PU 12 is configured to predict the current block to obtain a prediction block of the current block.

The determination unit 13 is configured to determine a transform core corresponding to the current block according to the prediction block.

The inverse TU 14 is configured to perform inverse transform on the target transform coefficient according to the transform core, and obtain a residual block of the current block according to a transform result of the inverse transform.

In some embodiments, the PU 12 is configured to perform inter prediction on the current block, to obtain the prediction block of the current block.

In some embodiments, the inverse TU 14 is configured to: perform inverse secondary transform on the target transform coefficient according to the transform core, to obtain a primary transform coefficient of the current block; and perform inverse primary transform on the primary transform coefficient, to obtain the residual block of the current block.

In some embodiments, the determination unit 13 is specifically configured to: determine texture information of the prediction block; and determine the transform core corresponding to the current block according to the texture information of the prediction block.

In some embodiments, the texture information of the prediction block includes gradient information of the prediction block, the determination unit 13 is specifically configured to: determine the gradient information of the prediction block; and determine the transform core corresponding to the current block according to the gradient information of the prediction block.

In some embodiments, the determination unit 13 is specifically configured to: determine gradients of N points in the prediction block, N is a positive integer; and determine the gradient information of the prediction block according to the gradients of the N points.

Optionally, the gradients of the N points include horizontal gradients and/or vertical gradients.

In some embodiments, in a case that the gradients of the N points include horizontal gradients and vertical gradients, the determination unit 13 is specifically configured to: for an i-th point of the N points, determine a horizontal gradient of the i-th point according to pixel values of adjacent points of the i-th point in a horizontal direction of the prediction block, i is a positive integer less than or equal to N; and determine a vertical gradient of the i-th point according to pixel values of adjacent points of the i-th point in a vertical direction of the prediction block.

In some embodiments, the determination unit 13 is specifically configured to: in a case that the adjacent points of the i-th point in the horizontal direction of the prediction block include a left adjacent point and a right adjacent point of the i-th point in the horizontal direction of the prediction block, determine a ratio of a difference value between a pixel value of the right adjacent point and a pixel value of the left adjacent point to 2 to be the horizontal gradient of the i-th point.

In some embodiments, the determination unit 13 is specifically configured to: in a case that the adjacent points of the i-th point in the vertical direction of the prediction block include an upper adjacent point and a lower adjacent point of the i-th point in the vertical direction of the prediction block, determine a ratio of a difference value between a pixel value of the lower adjacent point and a pixel value of the upper adjacent point to 2 to be the vertical gradient of the i-th point.

In some embodiments, the determination unit 13 is specifically configured to: determine a sum of horizontal gradients of the N points; determine a sum of vertical gradients of the N points; and determine the gradient information of the prediction block according to the sum of horizontal gradients of the N points and the sum of vertical gradients of the N points.

In some embodiments, the determination unit 13 is specifically configured to determine the gradient information of the prediction block according to a ratio of the sum of horizontal gradients of the N points to the sum of vertical gradients of the N points.

In some embodiments, the determination unit 13 is specifically configured to: in a case that the sum of vertical gradients of the N points is 0, determine the gradient information of the prediction block to be 0.

In some embodiments, the determination unit 13 is specifically configured to: determine whether the gradients of the N points meet a preset condition; and in a case that the gradients of the N points meet the preset condition, determine the gradient information of the prediction block according to the gradients of the N points.

In some embodiments, the preset condition includes at least one of:

a first condition: at least one of a sum of gradients in a horizontal direction or a sum of gradients in a vertical direction is equal to or greater than a first preset value; or

a second condition: at least one of gradients of at least M points in the horizontal direction or the vertical direction is equal to or greater than a second preset value, M is a positive integer less than or equal to N.

In some embodiments, in a case of determining that the gradients of the N points do not meet the preset condition, the TU 14 is configured to: skip an inverse secondary transform operation for the current block; or determine the transform core corresponding to the current block to be a first transform core, the first transform core is a transform core corresponding to a minimum directional texture of multiple preset transform cores.

Optionally, the N points are pixels in the prediction block other than pixels at an outermost layer; or, the N points are pixels obtained by sampling pixels in the prediction block.

In some embodiments, the determination unit 13 is specifically configured to: obtain a correspondence between preset prediction block gradients and transform cores; determine a target transform core corresponding to the gradient information of the prediction block from the correspondence; and determine the target transform core to be the transform core corresponding to the current block.

In some embodiments, the determination unit 13 is specifically configured to: determine a size of the transform core corresponding to the current block according to a size of the current block; obtain a correspondence, corresponding to the size of the transform core, between the preset prediction block gradients and the transform cores according to the size of the transform core corresponding to the current block; and determine the target transform core corresponding to the gradient information of the prediction block from the correspondence corresponding to the size of the transform core.

In some embodiments, the determination unit 13 is specifically configured to: in a case that at least one of a width of the current block or a height of the current block is less than 16, determine that the size of the transform core corresponding to the current block is $4\times4$; and in a case that each of the width of the current block and the height of the current block is greater than 8, determine that the size of the transform core corresponding to the current block is $8\times8$.

In some embodiments, the determination unit 13 is specifically configured to: input the prediction block into a pre-trained model, to obtain transform core indication information output by the model and corresponding to the current block, the transform core indication information is configured to indicate a transform core corresponding to the current block; and determine the transform core corresponding to the current block according to the transform core indication information.

In some embodiments, the determination unit 13 is specifically configured to: down-sample the prediction block; and input the down-sampled prediction block into the pre-trained model, to obtain the transform core indication information output by the model and corresponding to the current block.

In some embodiments, the decoding unit 11 is further configured to: decode the bitstream to obtain a quantization coefficient of the current block; and perform inverse quantization on the quantization coefficient, to obtain the target transform coefficient of the current block.

It should be understood that the apparatus embodiments and the method embodiments may correspond to each other, similar descriptions may refer to the method embodiments, which are not elaborated here to avoid repetition. Specifically, the video decoder 10 shown in FIG. 17 may perform the decoding method of the embodiment of the disclosure, and foregoing and other operations and/or functions of each unit in the video decoder 10 are intended to implement corresponding processes in various methods such as the above decoding method or the like respectively, which are not elaborated here for the sake of brevity.

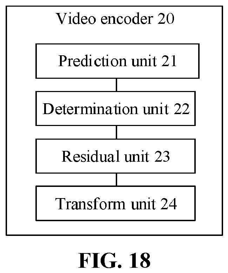

FIG. 18 is a schematic block diagram of a video encoder provided by an embodiment of the disclosure.

As shown in FIG. 18, the video encoder 20 may include a PU 21, a determination unit 22, a residual unit 23, and a TU 24.

The PU 21 is configured to predict a current block, to obtain a prediction block of the current block.

The determination unit 22 is configured to determine a transform core corresponding to the current block according to the prediction block.

The residual unit 23 is configured to obtain a residual block of the current block according to the prediction block and the current block.

The TU 24 is configured to transform the residual block according to the transform core, and encode a transformed coefficient to obtain a bitstream.

In some embodiments, the PU 21 is configured to perform inter prediction on the current block, to obtain the prediction block of the current block.

In some embodiments, the TU 24 is specifically configured to: perform primary transform on the residual block, to obtain a primary transform coefficient of the current block; perform secondary transform on the primary transform coefficient according to the transform core, to obtain a target transform coefficient of the current block; and encode the target transform coefficient to obtain the bitstream.

In some embodiments, the determination unit 22 is specifically configured to: determine texture information of the prediction block; and determine the transform core corresponding to the current block according to the texture information of the prediction block.

In some embodiments, the texture information of the prediction block includes gradient information of the prediction block, the determination unit 22 is specifically configured to: determine the gradient information of the prediction block; and determine the transform core corresponding to the current block according to the gradient information of the prediction block.

In some embodiments, the determination unit 22 is specifically configured to: determine gradients of N points in the prediction block, N is a positive integer; and determine the gradient information of the prediction block according to the gradients of the N points.

Optionally, the gradients of the N points include at least one of: horizontal gradients or vertical gradients.

In some embodiments, in a case that the gradients of the N points include horizontal gradients and vertical gradients, the determination unit 22 is specifically configured to: for an i-th point of the N points, determine a horizontal gradient of the i-th point according to pixel values of adjacent points of the i-th point in a horizontal direction of the prediction block, i is a positive integer less than or equal to N; and determine a vertical gradient of the i-th point according to pixel values of adjacent points of the i-th point in a vertical direction of the prediction block.

In some embodiments, the determination unit 22 is specifically configured to: in a case that the adjacent points of the i-th point in the horizontal direction of the prediction block include a left adjacent point and a right adjacent point of the i-th point in the horizontal direction of the prediction block, determine a ratio of a difference value between a pixel value of the right adjacent point and a pixel value of the left adjacent point to 2 to be the horizontal gradient of the i-th point.

In some embodiments, the determination unit 22 is specifically configured to: in a case that the adjacent points of the i-th point in the vertical direction of the prediction block include an upper adjacent point and a lower adjacent point of the i-th point in the vertical direction of the prediction block, determine a ratio of a difference value between a pixel value of the lower adjacent point and a pixel value of the upper adjacent point to 2 to be the vertical gradient of the i-th point.

In some embodiments, the determination unit 22 is specifically configured to: determine a sum of horizontal gradients of the N points; determine a sum of vertical gradients of the N points; and determine the gradient information of the prediction block according to the sum of horizontal gradients of the N points and the sum of vertical gradients of the N points.

In some embodiments, the determination unit 22 is specifically configured to determine the gradient information of the prediction block according to a ratio of the sum of horizontal gradients of the N points to the sum of vertical gradients of the N points.

In some embodiments, the determination unit 22 is specifically configured to: in a case that the sum of vertical gradients of the N points is 0, determine the gradient information of the prediction block to be 0.

In some embodiments, the determination unit 22 is specifically configured to: determine whether the gradients of the N points meet a preset condition; and in a case that the gradients of the N points meet the preset condition, determine the gradient information of the prediction block according to the gradients of the N points.

In some embodiments, the preset condition includes at least one of:

a first condition: at least one of a sum of gradients in a horizontal direction or a sum of gradients in a vertical direction is equal to or greater than a first preset value; or

a second condition: at least one of gradients of at least M points in the horizontal direction or the vertical direction is equal to or greater than a second preset value, M is a positive integer less than or equal to N.

In some embodiments, in a case of determining that the gradients of the N points do not meet the preset condition, the TU 24 is configured to: skip a secondary transform operation for the primary transform coefficient; or determine the transform core corresponding to the current block to be a first transform core, the first transform core is a transform core corresponding to a minimum directional texture of multiple preset transform cores of secondary transform.

Optionally, the N points are pixels in the prediction block other than pixels at an outermost layer; or, the N points are pixels obtained by sampling pixels in the prediction block.

In some embodiments, the determination unit 22 is specifically configured to: obtain a correspondence between preset prediction block gradients and transform cores; determine a target transform core corresponding to the gradient information of the prediction block from the correspondence; and determine the target transform core to be the transform core corresponding to the current block.

In some embodiments, the determination unit 22 is specifically configured to: determine a size of the transform core corresponding to the current block according to a size of the current block; obtain a correspondence, corresponding to the size of the transform core, between the preset prediction block gradients and the transform cores according to the size of the transform core corresponding to the current block; and determine the target transform core corresponding to the gradient information of the prediction block from the correspondence corresponding to the size of the transform core.

In some embodiments, the determination unit 22 is specifically configured to: in a case that at least one of a width of the current block or a height of the current block is less than 16, determine that the size of the transform core corresponding to the current block is $4\times4$; and in a case that each of the width of the current block and the height of the current block is greater than 8, determine that the size of the transform core corresponding to the current block is $8\times8$.

In some embodiments, the determination unit 22 is specifically configured to: input the prediction block into a pre-trained model, to obtain transform core indication information output by the model and corresponding to the current block, the transform core indication information is configured to indicate a transform core corresponding to the current block; and determine the transform core corresponding to the current block according to the transform core indication information.

In some embodiments, the determination unit 22 is specifically configured to: down-sample the prediction block; and input the down-sampled prediction block into the pre-trained model, to obtain the transform core indication information output by the model and corresponding to the current block.

In some embodiments, the TU 24 is specifically configured to: quantize the target transform coefficient to obtain a quantization coefficient of the current block; and encode the quantization coefficient to obtain the bitstream.

It should be understood that the apparatus embodiments and the method embodiments may correspond to each other, similar descriptions may refer to the method embodiments, which are not elaborated here to avoid repetition. Specifically, the video encoder 20 shown in FIG. 18 may correspond to a corresponding main body performing the coding method of the embodiment of the disclosure, and foregoing and other operations and/or functions of each unit in the video decoder 20 are intended to implement corresponding processes in various methods such as the above coding method or the like respectively, which are not elaborated here for the sake of brevity.

The apparatus and system of the embodiments of the disclosure are described as above from the perspective of functional units with reference to the drawings. It should be understood that the functional unit may be implemented in form of hardware, or may be implemented by instructions in form of software, or may be implemented by a combination of hardware and software units. Specifically, each operation of the method embodiments in the embodiments of the disclosure may be completed by an integrated logic circuit in form of hardware in a processor or instructions in form of software. Operations of the methods disclosed in combination with the embodiments of the disclosure may be directly embodied as being performed and completed by a hardware decoding processor, or performed and completed by a combination of hardware in the decoding processor and software units. Optionally, the software unit may be located in a mature storage medium in the field such as a random memory, a flash memory, a Read-Only Memory (ROM), a Programmable ROM (PROM), an electrically erasable programmable memory, a register, etc. The storage medium is located in a memory, and the processor reads information in the memory and completes operations of the above method embodiments in combination with hardware thereof.

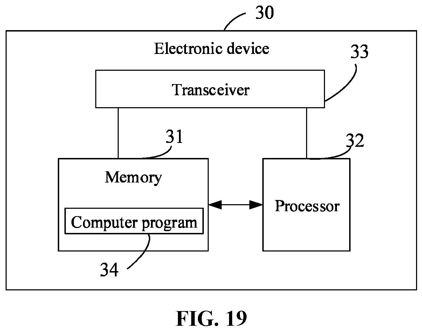

FIG. 19 is a schematic block diagram of an electronic device provided by an embodiment of the disclosure.

As shown in FIG. 19, the electronic device 30 may be the video encoder or the video decoder described in the embodiments of the disclosure.

The electronic device 30 may include a memory 33 and a processor 32. The memory 33 is configured to store a computer program 34, and transmit the program code 34 to the processor 32. In other words, the processor 32 may call and execute the computer program 34 from the memory 33, to implement the methods in the embodiments of the disclosure.

For example, the processor 32 may be configured to perform operations in the above method 200 according to instructions in the computer program 34.

In some embodiments of the disclosure, the processor 32 may include, but is not limited to a general-purpose processor, a Digital Signal Processor (DSP), an Application Specific Integrated Circuit (ASIC), a Field Programmable Gate Array (FPGA) or other programmable logic devices, a discrete gate or a transistor logic device, a discrete hardware component, etc.

In some embodiments of the disclosure, the memory 33 includes, but is not limited to a volatile memory and/or a non-volatile memory. The non-volatile memory may be a ROM, a PROM, an Erasable PROM (EPROM), an Electrically EPROM (EEPROM), or a flash memory. The volatile memory may be a Random Access Memory (RAM) used as an external cache. By way of exemplary descriptions rather than restrictive descriptions, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-Link DRAM (SLDRAM), a Direct Rambus RAM (DR RAM).

In some embodiments of the disclosure, the computer program 34 may be divided into one or more units, and the one or more units are stored in the memory 33 and executed by the processor 32 to complete the methods provided by the disclosure. The one or more units may be a series of computer program instruction segments capable of completing specific functions. The instruction segments are configured to describe execution processes of the computer program 34 in the electronic device 30.

As shown in FIG. 19, the electronic device 30 may further include a transceiver 33, the transceiver 33 may be connected to the processor 32 or the memory 33.

The processor 32 may control the transceiver 33 to communicate with other devices. Specifically, the processor 32 may control the transceiver 33 to send information or data to other devices, or receive information or data sent by other devices. The transceiver 33 may include a transmitter and a receiver. The transceiver 33 may further include an antenna, and there may be one or more antennas in number.

It should be understood that various components in the electronic device 30 are connected through a bus system, and the bus system includes a power bus, a control bus and a status signal bus in addition to a data bus.

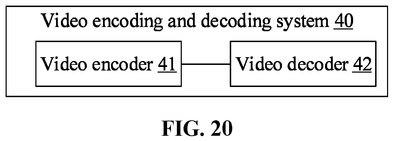

FIG. 20 is a schematic block diagram of a video encoding and decoding system provided by an embodiment of the disclosure.

As shown in FIG. 20, the video encoding and decoding system 40 may include a video encoder 41 and a video decoder 42, the video encoder 41 is configured to perform the method for video encoding related to the embodiments of the disclosure, and the video decoder 42 is configured to perform the method for video decoding related to the embodiments of the disclosure.

The disclosure further provides a computer storage medium, having stored thereon a computer program, the computer program allows a computer to perform the methods of the above method embodiments when the computer program is executed by the computer. Or, an embodiment of the disclosure further provides a computer program product containing instructions, the instructions allow a computer to perform the methods of the above method embodiments when the instructions are executed by the computer.

When it is implemented with software, the whole or part of it may be implemented in form of a computer program product. The computer program product includes one or more computer instructions. When the computer program instructions are loaded and executed on the computer, the whole or part of the processes or functions according to the embodiments of the disclosure are generated. The computer may be a general-purpose computer, a special-purpose computer, a computer network, or other programmable devices. The computer instructions may be stored in a computer-readable storage medium, or transmitted from a computer-readable storage medium to another computer-readable storage medium. For example, the computer instructions may be transmitted from a website, computer, server or data center to another website, computer, server or data center through a wired mode (such as a coaxial cable, an optical fiber, a Digital Subscriber Line (DSL)) or a wireless mode (such as infrared, wireless, microwave, etc.). The computer-readable storage medium may be any available medium which may be accessed by the computer, or a data storage device including a server, data center or the like integrated with one or more available media. The available media may be magnetic media (such as a floppy disk, a hard disk, a magnetic tape), optical media (such as a Digital Video Disc (DVD)), or semiconductor media (such as a Solid State Disk (SSD)), etc.

It may be appreciated by those of ordinary skill in the art that units and algorithm steps of each example described in combination with the embodiments disclosed here may be implemented by electronic hardware, or a combination of computer software and electronic hardware. Whether these functions are performed in hardware or software, depends on specific applications and design constraints of the technical solutions. Professional technicians may use different methods in each specific application to implement the described functions, however, such implementation should not be considered as going beyond the scope of the disclosure.

In several embodiments provided by the disclosure, it should be understood that the disclosed systems, apparatuses and methods may be implemented in other ways. For example, the above apparatus embodiments are only illustrative. For example, division of the units is only a logical function division. In an actual implementation, there may be other division modes. For example, multiple units or components may be combined or may be integrated into another system, or some features may be ignored or may not be performed. In another point, mutual coupling or direct coupling or communication connection as shown or discussed may be indirect coupling or communication connection through some interfaces, devices or units, and may be in electrical, mechanical or other forms.

The units described as separate components may be or may not be physically separated, and the components displayed as units may be or may not be physical units, that is, they may be located at one place, or may be distributed on multiple network units. Part or all of the units may be selected according to actual requirements, to achieve the purpose of the solutions of the embodiments. For example, each functional unit in each embodiment of the disclosure may be integrated into one processing unit, or each unit may separately exist physically, or two or more units may be integrated into one unit.

The above contents are only specific implementations of the disclosure, however, the scope of protection of the disclosure is not limited thereto. Variations or replacements easily conceived by any technician familiar with this technical field within the technical scope disclosed in the disclosure, should fall within the scope of protection of the disclosure. Therefore, the scope of protection of the disclosure shall be subjected to the scope of protection of the claims.

**Claims**

1. A method for video decoding, comprising:

   decoding a bitstream to determine a target transform coefficient of a current block;
   predicting the current block to obtain a prediction block of the current block;
   determining a transform core corresponding to the current block according to the prediction block; and
   performing inverse transform on the target transform coefficient according to the transform core, and obtaining a residual block of the current block according to a transform result of the inverse transform.

2. The method of claim 1, wherein predicting the current block to obtain the prediction block of the current block comprises:
   performing inter prediction on the current block, to obtain the prediction block of the current block.

3. The method of claim 1 or 2, wherein performing inverse transform on the target transform coefficient according to the transform core, and obtaining the residual block of the current block according to the transform result of the inverse transform comprises:

   performing inverse secondary transform on the target transform coefficient according to the transform core, to obtain a primary transform coefficient of the current block; and
   performing inverse primary transform on the primary transform coefficient, to obtain the residual block of the current block.

4. The method of claim 1 or 2, wherein determining the transform core corresponding to the current block according to the prediction block comprises:

   determining texture information of the prediction block; and
   determining the transform core corresponding to the current block according to the texture information of the prediction block.

5. The method of claim 4, wherein the texture information of the prediction block comprises gradient information of the prediction block,
   wherein determining the texture information of the prediction block comprises:

   determining the gradient information of the prediction block,
   wherein determining the transform core corresponding to the current block according to the texture information of the prediction block comprises:
determining the transform core corresponding to the current block according to the gradient information of the prediction block.

6. The method of claim 5, wherein determining the gradient information of the prediction block comprises:

   determining gradients of N points in the prediction block, wherein N is a positive integer; and
   determining the gradient information of the prediction block according to the gradients of the N points.

7. The method of claim 6, wherein the gradients of the N points comprise at least one of: horizontal gradients or vertical gradients.

8. The method of claim 7, wherein in a case that the gradients of the N points comprise horizontal gradients and vertical gradients, determining the gradients of the N points in the prediction block comprises:

   for an i-th point of the N points, determining a horizontal gradient of the i-th point according to pixel values of adjacent points of the i-th point in a horizontal direction of the prediction block, wherein i is a positive integer less than or equal to N; and
   determining a vertical gradient of the i-th point according to pixel values of adjacent points of the i-th point in a vertical direction of the prediction block.

9. The method of claim 8, wherein determining the horizontal gradient of the i-th point according to the pixel values of the adjacent points of the i-th point in the horizontal direction of the prediction block comprises:
   in a case that the adjacent points of the i-th point in the horizontal direction of the prediction block comprise a left adjacent point and a right adjacent point of the i-th point in the horizontal direction of the prediction block, determining a ratio of a difference value between a pixel value of the right adjacent point and a pixel value of the left adjacent point to 2 to be the horizontal gradient of the i-th point.

10. The method of claim 8, wherein determining the vertical gradient of the i-th point according to the pixel values of the adjacent points of the i-th point in the vertical direction of the prediction block comprises:
    in a case that the adjacent points of the i-th point in the vertical direction of the prediction block comprise an upper adjacent point and a lower adjacent point of the i-th point in the vertical direction of the prediction block, determining a ratio of a difference value between a pixel value of the lower adjacent point and a pixel value of the upper adjacent point to 2 to be the vertical gradient of the i-th point.

11. The method of claim 8, wherein determining the gradient information of the prediction block according to the gradients of the N points comprises:

   determining a sum of horizontal gradients of the N points;
   determining a sum of vertical gradients of the N points; and
   determining the gradient information of the prediction block according to the sum of horizontal gradients of the N points and the sum of vertical gradients of the N points.

12. The method of claim 11, wherein determining the gradient information of the prediction block according to the sum of horizontal gradients of the N points and the sum of vertical gradients of the N points comprises:
   determining the gradient information of the prediction block according to a ratio of the sum of horizontal gradients of the N points to the sum of vertical gradients of the N points.

13. The method of claim 11, further comprising:
   in a case that the sum of vertical gradients of the N points is 0, determining the gradient information of the prediction block to be 0.

14. The method of any one of claims 7 to 13, wherein determining the gradient information of the prediction block according to the gradients of the N points comprises:

   determining whether the gradients of the N points meet a preset condition; and
   in a case that the gradients of the N points meet the preset condition, determining the gradient information of the prediction block according to the gradients of the N points.

15. The method of claim 14, wherein the preset condition comprises at least one of:

   a first condition: at least one of a sum of gradients in a horizontal direction or a sum of gradients in a vertical direction is equal to or greater than a first preset value; or
   a second condition: at least one of gradients of at least M points in the horizontal direction or the vertical direction is equal to or greater than a second preset value, wherein M is a positive integer less than or equal to N.

16. The method of claim 14, further comprising: in a case of determining that the gradients of the N points do not meet the preset condition,

   skipping an inverse secondary transform operation for the current block; or
   determining the transform core corresponding to the current block to be a first transform core, wherein the first transform core is a transform core corresponding to a minimum directional texture of a plurality of preset transform cores.

17. The method of any one of claims 6 to 13, wherein the N points are pixels in the prediction block other than pixels at an outermost layer; or, the N points are pixels obtained by sampling pixels in the prediction block.

18. The method of any one of claims 5 to 13, wherein determining the transform core corresponding to the current block according to the gradient information of the prediction block comprises:

   obtaining a correspondence between preset prediction block gradients and transform cores;
   determining a target transform core corresponding to the gradient information of the prediction block from the correspondence; and
   determining the target transform core to be the transform core corresponding to the current block.

19. The method of claim 18, wherein obtaining the correspondence between the preset prediction block gradients and the transform cores comprises:

   determining a size of the transform core corresponding to the current block according to a size of the current block; and
   obtaining a correspondence, corresponding to the size of the transform core, between the preset prediction block gradients and the transform cores according to the size of the transform core corresponding to the current block,
   wherein determining the target transform core corresponding to the gradient information of the prediction block from the correspondence comprises:
   determining the target transform core corresponding to the gradient information of the prediction block from the correspondence corresponding to the size of the transform core.

20. The method of claim 19, wherein determining the size of the transform core corresponding to the current block according to the size of the current block comprises:

   in a case that at least one of a width of the current block or a height of the current block is less than 16, determining that the size of the transform core corresponding to the current block is $4 \times 4$; and

in a case that each of the width of the current block and the height of the current block is greater than 8, determining that the size of the transform core corresponding to the current block is $8 \times 8$.

21. The method of claim 1 or 2, wherein determining the transform core corresponding to the current block according to the prediction block comprises:

inputting the prediction block into a pre-trained model, to obtain transform core indication information output by the model and corresponding to the current block, wherein the transform core indication information is configured to indicate a transform core of secondary transform corresponding to the current block; and determining the transform core corresponding to the current block according to the transform core indication information.

22. The method of claim 21, wherein inputting the prediction block into the pre-trained model, to obtain the transform core indication information output by the model and corresponding to the current block comprises:

down-sampling the prediction block; and inputting the down-sampled prediction block into the pre-trained model, to obtain the transform core indication information output by the model and corresponding to the current block.

23. The method of claim 1 or 2, wherein decoding the bitstream to obtain the target transform coefficient of the current block comprises:

decoding the bitstream to obtain a quantization coefficient of the current block; and performing inverse quantization on the quantization coefficient, to obtain the target transform coefficient of the current block.

24. A method for video encoding, comprising:

predicting a current block to obtain a prediction block of the current block; determining a transform core corresponding to the current block according to the prediction block; obtaining a residual block of the current block according to the prediction block and the current block; and transforming the residual block according to the transform core, and encoding a transformed coefficient to obtain a bitstream.

25. The method of claim 24, wherein predicting the current block to obtain the prediction block of the current block comprises:
performing inter prediction on the current block, to obtain the prediction block of the current block.

26. The method of claim 24 or 25, wherein transforming the residual block according to the transform core, and encoding a transformed coefficient to obtain the bitstream comprises:

performing primary transform on the residual block, to obtain a primary transform coefficient of the current block; performing secondary transform on the primary transform coefficient according to the transform core, to obtain a target transform coefficient of the current block; and encoding the target transform coefficient to obtain the bitstream.

27. The method of claim 24 or 25, wherein determining the transform core corresponding to the current block according to the prediction block comprises:

determining texture information of the prediction block; and determining the transform core corresponding to the current block according to the texture information of the prediction block.

28. The method of claim 27, wherein the texture information of the prediction block comprises gradient information of the prediction block, wherein determining the texture information of the prediction block comprises:

determining the gradient information of the prediction block, wherein determining the transform core corresponding to the current block according to the texture information of the prediction block comprises: determining the transform core corresponding to the current block according to the gradient information of the prediction block.

29. The method of claim 28, wherein determining the gradient information of the prediction block comprises:

determining gradients of N points in the prediction block, wherein N is a positive integer; and determining the gradient information of the prediction block according to the gradients of the N points.

**30.** The method of claim 29, wherein the gradients of the N points comprise at least one of: horizontal gradients or vertical gradients.

**31.** The method of claim 30, wherein in a case that the gradients of the N points comprise horizontal gradients and vertical gradients, determining the gradients of the N points in the prediction block comprises:

for an i-th point of the N points, determining a horizontal gradient of the i-th point according to pixel values of adjacent points of the i-th point in a horizontal direction of the prediction block, wherein i is a positive integer less than or equal to N; and
determining a vertical gradient of the i-th point according to pixel values of adjacent points of the i-th point in a vertical direction of the prediction block.

**32.** The method of claim 31, wherein determining the horizontal gradient of the i-th point according to the pixel values of the adjacent points of the i-th point in the horizontal direction of the prediction block comprises:
in a case that the adjacent points of the i-th point in the horizontal direction of the prediction block comprise a left adjacent point and a right adjacent point of the i-th point in the horizontal direction of the prediction block, determining a ratio of a difference value between a pixel value of the right adjacent point and a pixel value of the left adjacent point to 2 to be the horizontal gradient of the i-th point.

**33.** The method of claim 31, wherein determining the vertical gradient of the i-th point according to the pixel values of the adjacent points of the i-th point in the vertical direction of the prediction block comprises:
in a case that the adjacent points of the i-th point in the vertical direction of the prediction block comprise an upper adjacent point and a lower adjacent point of the i-th point in the vertical direction of the prediction block, determining a ratio of a difference value between a pixel value of the lower adjacent point and a pixel value of the upper adjacent point to 2 to be the vertical gradient of the i-th point.

**34.** The method of claim 31, wherein determining the gradient information of the prediction block according to the gradients of the N points comprises:

determining a sum of horizontal gradients of the N points;
determining a sum of vertical gradients of the N points; and
determining the gradient information of the prediction block according to the sum of horizontal gradients of the N points and the sum of vertical gradients of the N points.

**35.** The method of claim 34, wherein determining the gradient information of the prediction block according to the sum of horizontal gradients of the N points and the sum of vertical gradients of the N points comprises:
determining the gradient information of the prediction block according to a ratio of the sum of horizontal gradients of the N points to the sum of vertical gradients of the N points.

**36.** The method of claim 34, further comprising:
in a case that the sum of vertical gradients of the N points is 0, determining the gradient information of the prediction block to be 0.

**37.** The method of any one of claims 30 to 36, wherein determining the gradient information of the prediction block according to the gradients of the N points comprises:

determining whether the gradients of the N points meet a preset condition; and
in a case that the gradients of the N points meet the preset condition, determining the gradient information of the prediction block according to the gradients of the N points.

**38.** The method of claim 37, wherein the preset condition comprises at least one of:

a first condition: at least one of a sum of gradients in a horizontal direction or a sum of gradients in a vertical direction is equal to or greater than a first preset value; or
a second condition: at least one of gradients of at least M points in the horizontal direction or the vertical direction is equal to or greater than a second preset value, wherein M is a positive integer less than or equal to N.

**39.** The method of claim 38, further comprising: in a case of determining that the gradients of the N points do not meet the preset condition,

skipping a secondary transform operation for the primary transform coefficient; or
determining the transform core corresponding to the current block to be a first transform core, wherein the first transform core is a transform core corresponding to a minimum directional texture of a plurality of preset transform cores.

**40.** The method of any one of claims 29 to 36, wherein the N points are pixels in the prediction block other than pixels at an outermost layer; or, the N points are pixels obtained by sampling pixels in the prediction block.

41. The method of any one of claims 28 to 36, wherein determining the transform core corresponding to the current block according to the gradient information of the prediction block comprises:

obtaining a correspondence between preset prediction block gradients and transform cores; determining a target transform core corresponding to the gradient information of the prediction block from the correspondence; and determining the target transform core to be the transform core corresponding to the current block.

42. The method of claim 41, wherein obtaining the correspondence between the preset prediction block gradients and the transform cores comprises:

determining a size of the transform core corresponding to the current block according to a size of the current block; and obtaining a correspondence, corresponding to the size of the transform core, between the preset prediction block gradients and the transform cores according to the size of the transform core corresponding to the current block, wherein determining the target transform core corresponding to the gradient information of the prediction block from the correspondence comprises: determining the target transform core corresponding to the gradient information of the prediction block from the correspondence corresponding to the size of the transform core.

43. The method of claim 42, wherein determining the size of the transform core corresponding to the current block according to the size of the current block comprises:

in a case that at least one of a width of the current block or a height of the current block is less than 16, determining that the size of the transform core corresponding to the current block is 4×4; and in a case that each of the width of the current block and the height of the current block is greater than 8, determining that the size of the transform core corresponding to the current block is 8×8.

44. The method of claim 24 or 25, wherein determining the transform core corresponding to the current block according to the prediction block comprises:

inputting the prediction block into a pre-trained model, to obtain transform core indication information output by the model and corresponding to the current block, wherein the transform core indication information is configured to indicate a transform core corresponding to the current block; and determining the transform core corresponding to the current block according to the transform core indication information.

45. The method of claim 44, wherein inputting the prediction block into the pre-trained model, to obtain the transform core indication information output by the model and corresponding to the current block comprises:

down-sampling the prediction block; and inputting the down-sampled prediction block into the pre-trained model, to obtain the transform core indication information output by the model and corresponding to the current block.

46. The method of claim 24 or 25, wherein obtaining the bitstream according to the target transform coefficient of the current block comprises:

quantizing the target transform coefficient to obtain a quantization coefficient of the current block; and encoding the quantization coefficient to obtain the bitstream.

47. A video decoder, comprising:

a decoding unit, configured to decode a bitstream to obtain a target transform coefficient of a current block; a prediction unit, configured to predict the current block to obtain a prediction block of the current block; a determination unit, configured to determine a transform core corresponding to the current block according to the prediction block; and a transform unit, configured to perform inverse transform on the target transform coefficient according to the transform core, and obtain a residual block of the current block according to a transform result of the inverse transform.

48. A video encoder, comprising:

a prediction unit, configured to predict a current block to obtain a prediction block of the current block; a determination unit, configured to determine a transform core corresponding to the current block according to the prediction block; a residual unit, configured to obtain a residual block of the current block according to the prediction block and the current block; and
a transform unit, configured to transform the residual block according to the transform core, and encode a transformed coefficient to obtain a bitstream.

49. A video decoder, comprising:

a memory, configured to store a computer program; and
a processor, configured to call and execute the computer program stored in the memory, to implement the method of any one of claims 1 to 23.

50. A video encoder, comprising:

a memory, configured to store a computer program; and
a processor, configured to call and execute the computer program stored in the memory, to implement the method of any one of claims 24 to 46.

51. A video encoding and decoding system, comprising:

the video encoder of claim 49; and
the video decoder of claim 50.

52. A computer-readable storage medium, configured to store a computer program,
the computer program causing a computer to execute the method of any one of claims 1 to 23 or the method of any one of claims 24 to 46.

**FIG. 1**

FIG. 2

Video decoder 300

Prediction unit 320

Inter prediction unit 321

Intra estimation unit 322

Bitstream → Header information decoding unit 310

Inverse quantization and transform unit 330

340

In loop filter unit 350

Decoded picture buffer 360

Video data

**FIG. 3**

**FIG. 4A**

**FIG. 4B**

16 coefficients are input into 4×4 LFNST
64 coefficients are input into 8×8 LFNST

Forward low frequency non-separable transform

Primary transform

Quantization

Bitstream

Inverse primary transform

Inverse quantization

Inverse low frequency non-separable transform

8 coefficients are input into 4×4 LFNST
16 coefficients are input into 8×8 LFNST

**FIG. 5**

(a)Transform core set 0　(b)Transform core set 1　(c)Transform core set 2　(d)Transform core set 3

**FIG. 6**

**FIG. 7**

**FIG. 8**

```
┌─────────────────────────────────────────────────────────┐
│   Decode a bitstream to obtain a target transform        │  ⌐⌐ S401
│   coefficient of a current block                         │
└─────────────────────────────────────────────────────────┘
                          │
                          ▼
┌─────────────────────────────────────────────────────────┐
│   Predict the current block to obtain a prediction       │  ⌐⌐ S402
│   block of the current block                             │
└─────────────────────────────────────────────────────────┘
                          │
                          ▼
┌─────────────────────────────────────────────────────────┐
│   Determine a transform core corresponding to the        │  ⌐⌐ S403
│   current block according to the prediction block        │
└─────────────────────────────────────────────────────────┘
                          │
                          ▼
┌─────────────────────────────────────────────────────────┐
│   Perform inverse transform on the target transform      │  ⌐⌐ S404
│   coefficient according to the transform core, and       │
│   obtain a residual block of the current block           │
│   according to a transform result of the inverse         │
│   transform                                              │
└─────────────────────────────────────────────────────────┘
```

**FIG. 9**

Target
transform
Bitstream    coefficient    Residual
Decoding    →    Inverse
transform    →    block

**FIG. 10**

Decode a bitstream to obtain a quantization coefficient of a current block — S501

Perform inverse quantization on the quantization coefficient, to obtain a target transform coefficient of the current block — S502

Perform inter prediction on the current block, to obtain a prediction block of the current block — S503

Determine gradients of N points in the prediction block — S504

Determine whether the gradients of the N points meet a preset condition — S505

No — S508

Determine the transform core corresponding to the current block to be a first transform core, the first transform core is a transform core corresponding to a minimum directional texture of multiple preset transform cores

Yes

Determine gradient information of the prediction block according to the gradients of the N points — S506

Determine a transform core corresponding to the current block according to the gradient information of the prediction block — S507

Perform inverse secondary transform on the target transform coefficient according to the transform core, to obtain a primary transform coefficient of the current block — S509

Perform inverse primary transform on the primary transform coefficient, to obtain a residual block of the current block — S511

No — S510

Skip an inverse secondary transform operation for the current block

## FIG. 11

Bitstream → Decoding → Quantization coefficient → Inverse quantization → Second transform coefficient → Inverse secondary transform → Primary transform coefficient → Inverse primary transform → Residual block

## FIG. 12

Predict a current block to obtain a prediction block of the
current block ⌇ S601

Determine a transform core corresponding to the current
block according to the prediction block ⌇ S602

Obtain a residual block of the current block according to the
prediction block and the current block ⌇ S603

Transform the residual block according to the transform core,
and encode a transformed coefficient to obtain a bitstream ⌇ S604

**FIG. 13**

Current block → **Prediction** → Prediction block → **Residual** → Residual block → **Transform** → Transform coefficient → **Encoding** → Bitstream

## FIG. 14

| Perform inter prediction on a current block, to obtain a prediction block of the current block | S701 |

↓

| Obtain a residual block of the current block according to the prediction block and the current block | S702 |

↓

| Perform primary transform on the residual block, to obtain a primary transform coefficient of the current block | S703 |

↓

| Determine gradients of N points in the prediction block | S704 |

↓

**S705**

No ← Determine whether the gradients of the N points meet a preset condition → No **S710**

S708 ← | Yes → S706 |

| Determine the transform core corresponding to the current block to be a first transform core, the first transform core is a transform core corresponding to a minimum directional texture of multiple preset transform cores | | Determine gradient information of the prediction block according to the gradients of the N points | | Skip a secondary transform operation for the primary transform coefficient, and use the primary transform coefficient as the target transform coefficient |

S707

| Determine a transform core corresponding to the current block according to the gradient information of the prediction block |

S709

| Perform secondary transform on the primary transform coefficient according to the transform core, to obtain a target transform coefficient of the current block |

S711

| Quantize the target transform coefficient of the current block to obtain a quantization coefficient |

S712

| Encode the quantization coefficient to obtain a bitstream |

**FIG. 15**

**FIG. 16**

Video decoder 10

Decoding unit 11

Prediction unit 12

Determination unit 13

Inverse transform unit 14

**FIG. 17**

Video encoder 20

Prediction unit 21

Determination unit 22

Residual unit 23

Transform unit 24

**FIG. 18**

30

Electronic device

33

Transceiver

31

Memory

Computer program

32

Processor

34

**FIG. 19**

Video encoding and decoding system 40

Video encoder 41 ——— Video decoder 42

**FIG. 20**

## INTERNATIONAL SEARCH REPORT

| International application No. |
| --- |
| **PCT/CN2021/121047** |

**A. CLASSIFICATION OF SUBJECT MATTER**

H04N 19/61(2014.01)i; H04N 19/60(2014.01)i; H04N 19/176(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT; WPI; EPODOC; CNKI; IEEE: 编码, 解码, 纹理, 模型, 变换核, 预测块, 当前块, 梯度, 选择, 确定, 水平梯度, 垂直梯度, code, decode, texture, model, transform, kernel, prediction, block, gradient, choose, select, horizontal gradient, vertical gradient.

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021137445 A1 (HUMAX CO., LTD. et al.) 08 July 2021 (2021-07-08) claims 1-20, and description, paragraphs 0031-0071, and figures 1-2 | 1-3, 21-26, 44-52 |
| A | WO 2017061671 A1 (LG ELECTRONICS INC.) 13 April 2017 (2017-04-13) entire document | 1-52 |
| A | WO 2021139572 A1 (GUANGDONG OPPO MOBILE TELECOMMUNICATIONS CORP., LTD.) 15 July 2021 (2021-07-15) entire document | 1-52 |
| A | CN 109922340 A (HUAWEI TECHNOLOGIES CO., LTD.) 21 June 2019 (2019-06-21) entire document | 1-52 |
| A | CN 110268715 A (GOOGLE INC.) 20 September 2019 (2019-09-20) entire document | 1-52 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 June 2022** | **24 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/121047**

| Patent document cited in search report | | | Publication date (day/month/year) | Patent family member(s) | | | Publication date (day/month/year) |
|---|---|---|---|---|---|---|---|
| WO | 2021137445 | A1 | 08 July 2021 | None | | | |
| WO | 2017061671 | A1 | 13 April 2017 | None | | | |
| WO | 2021139572 | A1 | 15 July 2021 | None | | | |
| CN | 109922340 | A | 21 June 2019 | WO | 2019114294 | A1 | 20 June 2019 |
| | | | | US | 2020296422 | A1 | 17 September 2020 |
| CN | 110268715 | A | 20 September 2019 | WO | 2018160231 | A1 | 07 September 2018 |
| | | | | EP | 3590258 | A1 | 08 January 2020 |
| | | | | US | 2018249179 | A1 | 30 August 2018 |

Form PCT/ISA/210 (patent family annex) (January 2015)